# EUROPEAN PATENT APPLICATION

(11) **EP 4 462 853 A1**
(43) Date of publication of application: **13.11.2024**
(21) Application number: 22926875.0
(22) Date of filing: 14.12.2022
(51) Int. Cl.: H04W 24/04

(54) **MEASUREMENT METHOD AND MEASUREMENT APPARATUS**

(30) Priority: 15.02.2022 CN 202210139123
(71) Applicant: Huawei Technologies Co., Ltd., Shenzhen, Guangdong 518129 (CN)
(72) Inventor: CAO, Longyu, Shenzhen, Guangdong 518129 (CN); YU, Yijun, Shenzhen, Guangdong 518129 (CN); HUANG, Xietian, Shenzhen, Guangdong 518129 (CN)
(74) Representative: Pfenning, Meinig & Partner mbB
(86) International application number: PCT/CN2022/139029
(87) International publication number: WO 2023/155575

(57) **Abstract**

This application provides a measurement method and a measurement apparatus, and may be used in various communication fields, such as 5G, 6G, 5G toB, end-to-end, device-to-device, machine-to-machine, vehicle-to-everything, and the internet of things. The method includes: A management device sends a measurement identifier to a measurement device. The measurement identifier is used to be associated with a to-be-measured target service, and the target service is a service corresponding to a data flow that passes through an industry terminal (such as CPE). The management device sends a measurement indication to the measurement device. The measurement indication indicates to measure a performance indicator of the target service associated with the measurement identifier, and the performance indicator of the target service is associated with an abnormal event (or referred to as a fault) of the target service. In this way, the measurement device can quickly recognize a to-be-measured service data packet based on whether a service is associated with the measurement identifier, to implement performance data collection at a finer granularity (that is, a service granularity), thereby improving accuracy of fault diagnostic analytics.

## Description

This application claims priority to Chinese Patent Application No. 202210139123.8, filed with the China National Intellectual Property Administration on February 15, 2022 and entitled "MEASUREMENT METHOD AND MEASUREMENT APPARATUS", which is incorporated herein by reference in its entirety.

### TECHNICAL FIELD

This application relates to the field of communication technologies, and more specifically, to a measurement method and a measurement apparatus.

### BACKGROUND

In a mobile network, an operator, as a network communication service provider, is responsible for network construction and routine operation and maintenance management. Network operation and maintenance management includes operation and maintenance management functions such as network configuration management, performance management, and fault management. The fault management is one of key and difficult points of network management for the operator. Currently, network fault management mechanisms defined in the 3rd generation partnership project (3rd generation partnership project, 3GPP) standard are mainly for network device fault management.

However, in some scenarios, for example, a 5th generation (5th generation, 5G) toB scenario, a large quantity of industry terminals, such as customer-premises equipment (customer-premises equipment, CPE), are deployed in the network. The CPE is used as an example. The CPE may be used as a terminal device, and is connected to an access network device by using a wireless technology to obtain a wireless network service. The CPE may alternatively be used as a wireless access point, and provides a wireless access function for another terminal device (such as a PLC or a camera). Therefore, in a scenario in which such an industry terminal is deployed, how to perform measurement for fault diagnostic analytics is a problem that needs to be resolved.

### SUMMARY

This application provides a measurement method and a measurement apparatus, to implement performance data measurement at a finer granularity (that is, a service granularity), so that fault diagnostic analytics can be performed based on measured performance data.

According to a first aspect, an embodiment of this application provides a measurement method. The method may be performed by a communication device, or may be performed by a component (for example, a chip or a circuit) of the communication device. This is not limited. For ease of description, the following uses an example in which the method is performed by a management device for description.

The method includes: A management device sends a measurement identifier to a measurement device. The measurement identifier is used to be associated with a to-be-measured target service, and the target service is a service corresponding to a data flow that passes through an industry terminal. The management device sends a measurement indication to the measurement device. The measurement indication indicates to measure a performance indicator of the target service associated with the measurement identifier, and the performance indicator of the target service is associated with an abnormal event of the target service.

For example, the industry terminal may be used as a terminal device and connected to an access network device by using a wireless technology to obtain a wireless network service, or may be used as a wireless access point to provide a wireless access function for another terminal device. In a possible situation, the industry terminal is, for example, customer-premises equipment (customer-premises equipment, CPE).

The target service is the service corresponding to the data flow that passes through the industry terminal, or it may be understood as that the target service is a to-be-measured service on the industry terminal. For example, the target service may be a service corresponding to a data flow that is sent to an application terminal and that passes through the industry terminal, or a service corresponding to a data flow that is sent by an application terminal and that passes through the industry terminal.

For example, the target service includes, for example, but is not limited to, a video service (for example, a video surveillance backhaul service) and a remote control instruction service.

Based on the foregoing technical solution, the management device may send, to the measurement device, a measurement identifier used to be associated with a to-be-measured target service in the service corresponding to the data flow that passes through the industry terminal, and the management device may further send, to the measurement device, a measurement indication indicating to measure the performance indicator of the target service associated with the measurement identifier. In this way, the measurement device can quickly recognize a to-be-measured service data packet based on whether a service is associated with the measurement identifier, to implement performance data collection at a finer granularity (that is, a service granularity). In this way, if fault diagnostic analytics needs to be performed, abnormal fault diagnostic analytics at the service granularity may be performed based on performance data of the service. In this way, a problem that a performance data analytics result based only on an air interface of a wireless network is inaccurate can be overcome, and in comparison with device-level fault diagnostic analytics, the foregoing technical solution improves accuracy of the fault diagnostic analytics. For example, if the measurement device performs device-level fault diagnostic analytics, an average performance indicator of all services on the measurement device is collected. Even if performance indicators of some services on the measurement device are abnormal, a final diagnostic analytics result may be that the measurement device is not abnormal because the average performance indicator is used as a real performance indicator of each service. Consequently, the fault diagnostic analytics result is inaccurate, and it is difficult to locate a fault. Therefore, through the foregoing technical solution, a problem of the inaccurate result based on device-level performance data analytics can be further overcome.

With reference to the first aspect, in some implementations of the first aspect, the method further includes: The management device configures a measurement identifier for the target service.

Based on the foregoing technical solution, the management device may configure the measurement identifier for the target service. In this way, the management device sends the measurement identifier to the measurement device after configuring the measurement identifier, to avoid signaling overheads caused by that another device configures the measurement identifier and sends the measurement identifier to the management device and then the management device sends the measurement identifier to the measurement device.

With reference to the first aspect, in some implementations of the first aspect, the method further includes: The management device sends one or more of the following information to the measurement device: a data packet type of the target service associated with the measurement identifier, an identifier of the target service, a customer-premises equipment identifier corresponding to the target service, or an identifier of the terminal device.

For example, the one or more of information and the measurement identifier may be carried in a same piece of signaling. In this manner, the one or more of information and the measurement identifier may be carried in the same piece of signaling for transmission. This can reduce signaling overheads, and also help the measurement device learn of the measurement identifier and the one or more of information based on the one piece of signaling.

For example, the one or more of information and the measurement identifier may be carried in different pieces of signaling. In this manner, the one or more of information and the measurement identifier may be carried in the different pieces of signaling for transmission. In this way, the measurement identifier and the one or more of information do not need to be bound in the one piece of signaling for transmission, so that transmission is flexible.

For example, the data packet type of the target service associated with the measurement identifier indicates a type of a data packet that needs to be associated with the measurement identifier (or referred to as a data packet on which coloring processing needs to be performed), for example, including an uplink data packet and/or a downlink data packet. For example, the management device may determine, based on the abnormal event of the target service, the type of the data packet that needs to be associated with the measurement identifier.

For example, the identifier of the target service may be used to identify (or recognize) the target service. The identifier of the target service may be an IP 5-tuple (IP 5-tuple).

For example, the customer-premises equipment identifier corresponding to the target service, for example, a CPE identifier (CPE Id), may be used to identify (or recognize) the CPE. For example, the CPE Id may be any one of the following: an electronic serial number (equipment serial number, ESN) of the CPE, an IP address of the CPE, or a globally unique temporary subscriber identity (globally unique temporary UE identity, GUTI) of the CPE.

For example, the identifier (for example, denoted as a DeviceId) of the terminal device may be used to identify (or recognize) a device to which the occurred target service belongs or a device on which an abnormal event occurs.

With reference to the first aspect, in some implementations of the first aspect, that a management device sends a measurement identifier to a measurement device includes: After receiving a maintenance and testing request for performing maintenance and testing on the target service, the management device sends the measurement identifier to the measurement device; after receiving a monitoring request for monitoring the performance indicator of the target service, the management device sends the measurement identifier to the measurement device; or after detecting, through monitoring, that the terminal device goes online, the management device sends the measurement identifier to the measurement device.

Based on the foregoing technical solution, an occasion, or referred to as a trigger condition, at which the management device sends the measurement identifier (or configures the measurement identifier for the target service) to the measurement device may be flexible. For example, the management device may send the measurement identifier to the measurement device after receiving the request for performing maintenance and testing on the target service. In this way, the management device may configure, based on an actual situation, the measurement identifier for a service that needs to be maintained and measured, and send the measurement identifier, to avoiding overheads caused by sending a measurement identifier of a service that does not need to be maintained and measured. For another example, the management device may send the measurement identifier to the measurement device after receiving the request for monitoring the performance indicator of the target service. In this way, impact of a delay in transmission of the measurement identifier on data collection may be reduced, so that collected data is network status performance data in a case in which the network fault occurs, to improve the accuracy of fault diagnostic analytics. For still another example, the management device may send the measurement identifier to the measurement device after learning that the terminal device goes online. In this way, the impact of the delay in transmission of the measurement identifier on the data collection may be reduced, so that the collected data is the network status performance data in a case in which the network fault occurs, to improve the accuracy of fault diagnostic analytics.

With reference to the first aspect, in some implementations of the first aspect, the method further includes: The management device receives address information of the measurement device.

For example, the management device receives, from the measurement device, feedback information feeding back whether to associate the measurement identifier with the target service. The feedback information includes the address information of the measurement device.

Based on the foregoing technical solution, the management device may further receive an address of the measurement device, so that the address can be used to implement that the management device sends a route of a related message to the measurement device subsequently.

With reference to the first aspect, in some implementations of the first aspect, that the management device sends a measurement indication to the measurement device includes: After receiving the maintenance and testing request for performing maintenance and testing on the target service, the management device sends the measurement indication to the measurement device; or after receiving the monitoring request for monitoring the performance indicator of the target service, the management device sends the measurement indication to the measurement device.

Based on the foregoing technical solution, an occasion, or referred to as a trigger condition, at which the management device sends the measurement indication to the measurement device may be flexible. For example, the management device may send the measurement indication to the measurement device after receiving the request for performing maintenance and testing on the target service. In this way, the management device may measure, based on an actual situation, performance data of the service that needs to be maintained and tested, to avoid overheads caused by measuring performance data of the service that does not need to be maintained and measured. For another example, the management device may send the measurement indication to the measurement device after receiving the request for monitoring the performance indicator of the target service. In this way, the impact on the data collection may be performed in advance, so that the collected data is the network status performance data in a case in which the network fault occurs, to improve the accuracy of the fault diagnostic analytics.

With reference to the first aspect, in some implementations of the first aspect, after receiving the monitoring request for monitoring the performance indicator of the target service, the management device sends the measurement indication to the measurement device. The method further includes: The management device sends a measurement result cache indication of the target service and/or measurement result cache time of the target service to the measurement device.

The measurement result cache indication of the target service indicates to cache performance data obtained through measurement statistics collection.

The measurement result cache time of the target service indicates time information (for example, a time length) for locally caching the performance data obtained through the measurement statistics collection.

Based on the foregoing technical solution, the management device may further send the measurement result cache indication of the target service to the measurement device, so that the measurement device may temporarily not report a measurement result based on the measurement result cache indication, and cache the measurement result. Alternatively, the management device may further send the measurement result cache time of the target service to the measurement device, so that the measurement device may cache the measurement result based on the measurement result cache time, to avoid insufficient storage space caused by continuously caching the measurement result of the target service.

With reference to the first aspect, in some implementations of the first aspect, the method further includes: The management device sends a measurement result reporting indication to the measurement device. The measurement result reporting indication indicates to report a measurement result of the target service in a target time period.

Based on the foregoing technical solution, the management device sends the measurement result reporting indication to the measurement device, so that the measurement device may report the measurement result of the target service in the target time period based on the measurement result reporting indication.

With reference to the first aspect, in some implementations of the first aspect, the method further includes: The management device sends one or more of the following information to the measurement device: the performance indicator of the target service, a maintenance and testing job identifier, the measurement identifier, measurement time of the target service, a measurement manner of the measurement device, or an address of the measurement device.

The measurement time of the target service indicates information related to the measurement time. For example, the measurement time of the target service includes a manner of performing measurement by a device that performs data measurement, measurement start time, and measurement end time.

The measurement manner of the measurement device indicates the manner of performing measurement by the device that performs data measurement, for example, may include instant measurement and delay measurement.

Based on the foregoing technical solution, the management device sends the one or more of the following information to the measurement device: the performance indicator of the target service, the maintenance and testing job identifier, the measurement identifier, the measurement time of the target service, the measurement manner of the measurement device, or the address of the measurement device. In this way, the measurement device may measure the target service based on the one or more of the foregoing information.

With reference to the first aspect, in some implementations of the first aspect, the maintenance and testing request includes one or more of the following information: the abnormal event of the target service, the identifier of the terminal device, or the identifier of the target service.

Based on the foregoing technical solution, the maintenance and testing request may include the one or more of the following information: the abnormal event of the target service, the identifier of the terminal device, or the identifier of the target service, to help the management device make a related decision. For example, the management device may determine the performance indicator of the target service based on the abnormal event of the target service, for another example, determine a data packet type of the to-be-measured target service.

With reference to the first aspect, in some implementations of the first aspect, the method further includes: The management device sends the performance indicator of the target service to the measurement device.

Based on the foregoing technical solution, the management device may further send the performance indicator of the target service to the measurement device, so that the measurement device performs measurement based on the performance indicator.

With reference to the first aspect, in some implementations of the first aspect, the method further includes: The management device determines the performance indicator of the target service based on the abnormal event of the target service and/or a service type to which the target service belongs.

Based on the foregoing technical solution, the management device may determine the performance indicator of the target service based on the abnormal event of the target service and/or the service type to which the target service belongs, so that a proper performance indicator can be determined based on an actual situation in which the fault occurs or the type to which the service belongs, and fault analytics can be performed based on an accurate performance indicator.

With reference to the first aspect, in some implementations of the first aspect, the abnormal event of the target service includes at least one of the following: video freezing corresponding to the target service or a control delay abnormality corresponding to the target service.

With reference to the first aspect, in some implementations of the first aspect, the performance indicator of the target service includes at least one of the following: a quantity of lost packets of an uplink packet data convergence protocol, a quantity of lost packets of a downlink packet data convergence protocol, an uplink air interface transmission delay, a downlink air interface transmission delay, a quantity of packet data convergence protocol packets whose uplink air interface transmission delays are greater than a first threshold, a downlink packet user plane function network element processing delay, a downlink packet terminal device processing delay, a downlink packet radio access network element device processing delay, a quantity of downlink N3 interface data packets whose delays are greater than a second threshold, or a downlink N3 interface data packet transmission delay.

Based on the foregoing technical solution, the performance indicator of the target service may include at least one of the foregoing. Specifically, the performance indicator may be determined based on the abnormal event of the target service and/or the service type to which the target service belongs. Further, in an actual application, the proper performance indicator may be selected from the at least one of the foregoing for measurement based on an actual situation.

With reference to the first aspect, in some implementations of the first aspect, the measurement device includes one or more of the following: a core network element device, a radio access network device, or customer-premises equipment corresponding to the target service.

According to a second aspect, an embodiment of this application provides a measurement method. The method may be performed by a communication device, or may be performed by a component (for example, a chip or a circuit) of the communication device. This is not limited. For ease of description, the following uses an example in which the method is performed by a measurement device for description.

The method may include: A measurement device receives a measurement identifier from a management device. The measurement identifier is used to be associated with a to-be-measured target service, and the target service is a service corresponding to a data flow that passes through an industry terminal. The measurement device associates the measurement identifier with the target service. The measurement device measures a performance indicator of the target service associated with the measurement identifier. The performance indicator of the target service is associated with an abnormal event of the target service.

Based on the foregoing technical solution, after receiving the measurement identifier from the management device, the measurement device may associate the measurement identifier with the to-be-measured target service in the service corresponding to the data flow that passes through the industry terminal, to measure the performance indicator of the target service associated with the measurement identifier. In this way, the measurement device can quickly recognize a to-be-measured service data packet based on whether a service is associated with the measurement identifier, to implement performance data collection at a finer granularity (that is, a service granularity). In this case, if fault diagnostic analytics needs to be performed, abnormal fault diagnostic analytics at the service granularity may be performed based on performance data of the service. In this way, a problem that a performance data analytics result based only on an air interface of a wireless network is inaccurate can be overcome, and in comparison with device-level fault diagnostic analytics, the foregoing technical solution improves accuracy of the fault diagnostic analytics. For example, if the measurement device performs device-level fault diagnostic analytics, an average performance indicator of all services on the measurement device is collected. Even if performance indicators of some services on the measurement device are abnormal, a final diagnostic analytics result may be that the measurement device is not abnormal because the average performance indicator is used as a real performance indicator of each service. Consequently, the fault diagnostic analytics result is inaccurate, and it is difficult to locate a fault. Therefore, through the foregoing technical solution, the problem of an inaccurate result based on device-level performance data analytics can be further overcome.

With reference to the second aspect, in some implementations of the second aspect, the method further includes: The measurement device receives one or more of the following information from the management device: a data packet type of the target service associated with the measurement identifier, an identifier of the target service, a customer-premises equipment identifier corresponding to the target service, or an identifier of the terminal device.

With reference to the second aspect, in some implementations of the second aspect, that the measurement device associates the measurement identifier with the target service includes: The measurement device adds the measurement identifier to a data packet of the target service.

With reference to the second aspect, in some implementations of the second aspect, the method further includes: The measurement device sends address information of the measurement device.

With reference to the second aspect, in some implementations of the second aspect, the method further includes: The measurement device receives a measurement indication from the management device. The measurement indication indicates to measure the performance indicator of the target service associated with the measurement identifier. That the measurement device measures a performance indicator of the target service associated with the measurement identifier includes: In response to the measurement indication, the measurement device measures the performance indicator of the target service associated with the measurement identifier.

With reference to the second aspect, in some implementations of the second aspect, the method further includes: The measurement device receives a measurement result cache indication of the target service and/or measurement result cache time of the target service from the management device. The measurement device caches a measurement result of the target service based on the measurement result cache indication of the target service and/or the measurement result cache time of the target service.

With reference to the second aspect, in some implementations of the second aspect, the method further includes: If the measurement device receives a measurement result reporting indication from the management device in a preset time period, the measurement device reports a measurement result in a target time period to the management device, where the measurement result reporting indication indicates to report the measurement result of the target service in the target time period; or if the measurement device does not receive the measurement result reporting indication from the management device in the preset time period, the measurement device deletes a cached measurement result of the target service in the target time period.

With reference to the second aspect, in some implementations of the second aspect, the method further includes: The measurement device receives one or more of the following information from the management device: the performance indicator of the target service, a maintenance and testing job identifier, the measurement identifier, measurement time of the target service, a measurement manner of the measurement device, or an address of the measurement device.

For beneficial effects of the second aspect and the possible designs, refer to the related descriptions of the first aspect. Details are not described herein again.

According to a third aspect, an embodiment of this application provides a measurement method. The method may be performed by a communication device, or may be performed by a component (for example, a chip or a circuit) of the communication device. This is not limited. For ease of description, the following uses an example in which the method is performed by a network element management device for description.

The method may include: The network element management device receives a measurement indication from a management device. The measurement indication indicates a measurement device to measure a performance indicator of a target service associated with a measurement identifier. The target service is a service corresponding to a data flow that passes through an industry terminal, the performance indicator of the target service is associated with an abnormal event of the target service, and the measurement identifier is used to be associated with a to-be-measured target service. The network element management device forwards the measurement indication to the measurement device.

With reference to the third aspect, in some implementations of the third aspect, the method further includes: The network element management device receives an address of customer-premises equipment corresponding to the target service from the management device. The network element management device determines an address of the measurement device based on the address of the customer-premises equipment corresponding to the target service.

According to a fourth aspect, an embodiment of this application provides a measurement method. The method may be performed by a communication device, or may be performed by a component (for example, a chip or a circuit) of the communication device. This is not limited. For ease of description, the following uses an example in which the method is performed by an application server for description.

The method may include: The application server detects that an abnormality event occurs in a target service corresponding to a data flow that passes through an industry terminal. The application server sends, to a management device, a maintenance and testing request for performing maintenance and testing on the target service.

With reference to the fourth aspect, in some implementations of the fourth aspect, the method further includes: The application server further sends one or more of the following information to the management device: the abnormal event of the target service, an identifier of a terminal device, or an identifier of the target service.

With reference to the fourth aspect, in some implementations of the fourth aspect, before the application server sends the maintenance and testing request for performing maintenance and testing on the target service to the management device, the method further includes: The application server sends, to the management device, a monitoring request for monitoring a performance indicator of the target service.

According to a fifth aspect, an embodiment of this application provides a communication apparatus. The apparatus is configured to perform the method according to the first aspect to the fourth aspect. Specifically, the apparatus may include units and/or modules configured to perform the method according to any one of the implementations of the first aspect to the fourth aspect, for example, a processing unit and/or a communication unit.

In an implementation, the apparatus is a communication device (for example, a management device or a measurement device). When the apparatus is a communication device, the communication unit may be a transceiver or an input/output interface. The processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the management device or the measurement device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a sixth aspect, an embodiment of this application provides a communication apparatus. The apparatus includes: a memory, configured to store a program; and at least one processor, configured to execute a computer program or instructions stored in the memory, to perform the method according to any one of the implementations of the first aspect to the fourth aspect.

In an implementation, the apparatus is a communication device (for example, a management device or a measurement device).

In another implementation, the apparatus is a chip, a chip system, or a circuit used in the communication device (for example, the management device or the measurement device).

According to a seventh aspect, an embodiment of this application provides a processor, configured to perform the method according to the foregoing aspects.

Unless otherwise specified, or if operations such as sending and obtaining/receiving related to the processor do not conflict with actual functions or internal logic in related descriptions, the operations may be understood as operations such as outputting, receiving, and inputting of the processor, or may be understood as sending and receiving operations performed by a radio frequency circuit and an antenna. This is not limited in this application.

According to an eighth aspect, an embodiment of this application provides a computer-readable storage medium. The computer-readable medium stores program code to be executed by a device, and the program code is used to perform the method according to any one of the implementations of the first aspect to the fourth aspect.

According to a ninth aspect, an embodiment of this application provides a computer program product including instructions. When the computer program product is run on a computer, the computer is enabled to perform the method according to any one of the implementations of the first aspect to the fourth aspect.

According to a tenth aspect, an embodiment of this application provides a chip. The chip includes a processor and a communication interface. The processor reads, through the communication interface, instructions stored in a memory, to perform the method according to any one of the implementations of the first aspect to the fourth aspect.

Optionally, in an implementation, the chip further includes the memory. The memory stores a computer program or the instructions, the processor is configured to execute the computer program or the instructions stored in the memory, and when the computer program or the instructions are executed, the processor is configured to perform the method according to any one of the implementations of the first aspect to the fourth aspect.

According to an eleventh aspect, an embodiment of this application provides a communication system. The communication system includes one or more of the foregoing management device, measurement device, network element management device, and application server.

### BRIEF DESCRIPTION OF DRAWINGS

FIG. 1 is a diagram of a network architecture to which an embodiment of this application is applicable;
FIG. 2 is another diagram of a network architecture to which an embodiment of this application is applicable;
FIG. 3 is a diagram of a network architecture according to an embodiment of this application;
FIG. 4 is another diagram of a network architecture according to an embodiment of this application;
FIG. 5 is a diagram of a measurement method according to an embodiment of this application;
FIG. 6A and FIG. 6B are a schematic flowchart of a measurement method according to an embodiment of this application;
FIG. 7A and FIG. 7B are a schematic flowchart of a measurement method according to another embodiment of this application;
FIG. 8A and FIG. 8B are a schematic flowchart of a measurement method according to an embodiment of this application;
FIG. 9 is a block diagram of a measurement apparatus according to an embodiment of this application;
FIG. 10 is another block diagram of a measurement apparatus according to an embodiment of this application; and
FIG. 11 is a diagram of a chip system according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to end-to-end (end-to-end, E2E), device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

First, a network architecture to which this application is applicable is briefly described below.

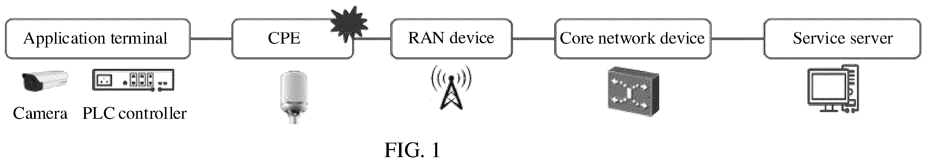

FIG. 1 is a diagram of a network architecture to which an embodiment of this application is applicable.

As shown in FIG. 1, an E2E network in a 5G toB scenario is used as an example in the network architecture. For example, the network architecture may include but is not limited to: an application terminal, customer-premises equipment (customer-premises equipment, CPE), a radio access network (radio access network, RAN) device, a core network device, and a service server.

The following briefly describes devices shown in FIG. 1.
1. The application terminal may be referred to as user equipment (user equipment, UE), a terminal device, an access terminal, a subscriber unit, a subscriber station, a mobile station, a mobile console, a remote station, a remote terminal, a mobile device, a user terminal, a terminal, a wireless communication device, a user agent, or a user apparatus. In this application, the terminal device is uniformly used for description. In other words, the terminal device in this application may be replaced with the application terminal.

The terminal device may be a device that provides voice/data for a user, for example, a handheld device or a vehicle-mounted device that has a wireless connection function. Currently, some examples of the terminal may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, or a terminal device in a future evolved public land mobile network (public land mobile network, PLMN). This is not limited in embodiments of this application.

By way of example but not of limitation, in this embodiment of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not merely a hardware device, but is used to implement a powerful function through software support, data exchange, and cloud interaction. In a broad sense, wearable intelligent devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

In addition, the terminal device in this embodiment of this application may alternatively be a terminal device in an IoT system. An IoT is an important part of future development of information technologies. A main technical feature of the IoT is connecting a thing to a network by using a communication technology, to implement an intelligent network for interconnection between a person and a machine or between one thing and another. It may be understood that the terminal device in this embodiment of this application may be a terminal that implements an application, for example, a terminal having a camera function, or a terminal that can perform data transmission.

As shown in FIG. 1, the terminal device may be, for example, a camera, or may be a programmable controller (programmable logic controller, PLC).

In this embodiment of this application, an apparatus configured to implement a function of the terminal device may be a terminal device, or may be an apparatus, for example, a chip system or a chip, that can support the terminal device in implementing the function. The apparatus may be installed in the terminal device. In this embodiment of this application, the chip system may include a chip, or may include a chip and another discrete component.

2. The CPE may be used as a terminal device, and is connected to an access network device by using a wireless technology to obtain a wireless network service. The CPE may alternatively be used as a wireless access point, and provides a wireless access function for another terminal device (such as a PLC or a camera).

It should be noted that, in this embodiment of this application, the CPE is mainly used as an example for description. This is not limited herein. Another industry terminal similar to the CPE is also applicable to this embodiment of this application. An industry terminal may be used as a terminal device and connected to an access network device by using a wireless technology to obtain a wireless network service, or may be used as a wireless access point to provide a wireless access function for another terminal device.

3. The RAN device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the RAN device is used for representation in the following.

For example, the RAN device may use different radio access technologies. Currently, there are two types of radio access technologies: a 3GPP access technology (for example, a radio access technology used in a 3rd generation (3rd generation, 3G), 4th generation (4th generation, 4G), or 5G system) and a non-3GPP (non-3GPP) access technology. The 3GPP access technology is an access technology that complies with a 3GPP standard specification. For example, an access network device in the 5G system is referred to as a next generation node base station (next generation node base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), a code division multiple access (code division multiple access, CDMA), or the like. The RAN device may allow interconnection and interworking between the terminal device and a 3GPP core network by using the non-3GPP technology.

The RAN device can be responsible for functions on an air interface side, such as radio resource management, quality of service (quality of service, QoS) management, and data compression and encryption. The RAN device provides an access service for the terminal device, to complete forwarding of a control signal and user data between the terminal device and the core network.

The RAN device may also be referred to as a network device. The RAN device may be, for example, a base station. The base station may cover various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a radio-frequency head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that performs a base station function in a future communication system, or the like. The base station may support networks of a same access technology or different access technologies. A specific technology and a specific device form that are used by the network device are not limited in this embodiment of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in this embodiment of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on land, including an indoor or outdoor device, a handheld device, or a vehicle-mounted device; may be deployed on a water surface; or may be deployed on a plane, a balloon, or a satellite in the air. Scenarios in which the network device and the terminal device are located are not limited in this embodiment of this application.

4. Core network device: For example, the core network device (or referred to as a network element in the core network) may include but is not limited to any one of the following: a network slice selection function (network slice selection function, NSSF), an authentication server function (authentication server function, AUSF), unified data management (unified data management, UDM), a network exposure function (network exposure function, NEF), a network storage function (NF repository function, NRF), a policy control function (policy control function, PCF), an application function (application function, AF), an access and mobility management function (access and mobility management function, AMF), a session management function (session management function, SMF), a user plane function (user plane function, UPF), and a network data analytics function (network data analytics function, NWDAF). For example, functions of the core network element are as follows.

The AMF is mainly for functions such as access control, mobility management, registration, and deregistration. For example, in this embodiment of this application, the AMF may be responsible for authentication and mobility management functions of the CPE.

The SMF is mainly used to perform user plane network element selection, user plane network element redirection, internet protocol (internet protocol, IP) address allocation for the terminal device, session establishment, modification, and release, and QoS control. For example, in this embodiment of this application, the SMF may be responsible for session management of user plane data transmission of the CPE, including session creation, deletion, and modification.

The UPF is mainly for receiving and forwarding of user plane data. For example, the UPF may receive the user plane data from the DN, and send the user plane data to the terminal device through an AN device. The UPF may further receive the user plane data from the terminal device through the AN device, and forward the user plane data to the DN.

The NEF is mainly for securely exposing, to the outside, a service, a capability, and the like that are provided by a 3GPP network function.

The PCF is mainly for guiding a unified policy framework for network behavior, and providing policy rule information and the like for a control plane network element (for example, the AMF or the SMF).

The AF is mainly for providing a service for a 3GPP network, for example, interacting with the PCF to perform policy control.

The NSSF is mainly for selecting a network slice.

The UDM is mainly for subscription data management of UE, including storage and management of a UE identifier, access authorization of the UE, and the like.

The AUSF is mainly for user authentication and the like.

The NRF is mainly for storing a network function entity, description information of a service provided by the network function entity, and the like.

The NWDAF is mainly for intelligently analyzing data such as network status data.

5. The service server indicates a computer system that can provide some services for another device. For example, a video service server may provide a video service (for example, playing a video). For another example, a control service server may send a control command to the terminal device.

As shown in FIG. 1, as a common terminal, the CPE is connected to the RAN device (for example, the gNB) by using the wireless technology, and the RAN device is connected to the service server through the core network. In addition, the CPE may be used as a wireless access point to provide the wireless access function for another terminal (for example, the PLC or the camera). In this way, an E2E network may be formed from the service server to the application terminal.

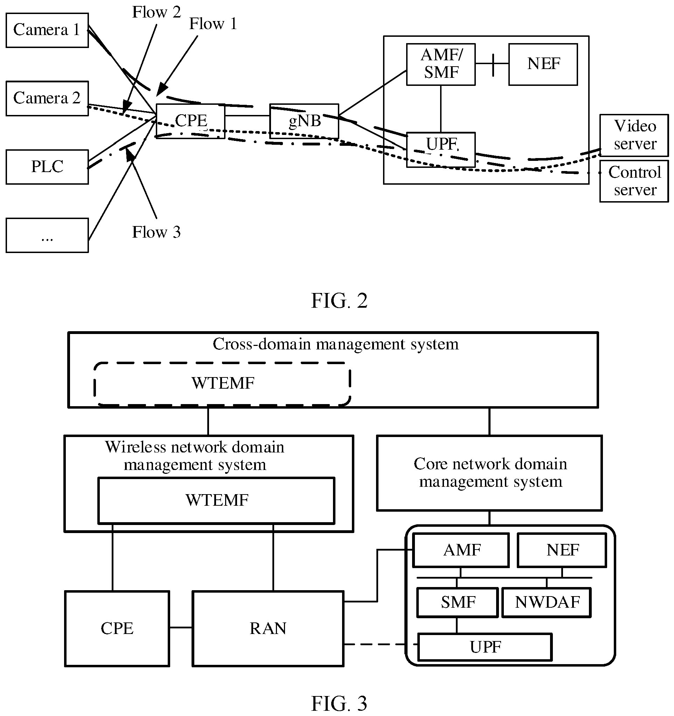

FIG. 2 is another diagram of a network architecture to which an embodiment of this application is applicable.

The network architecture shown in FIG. 2 is applicable to a 5G toB service scenario. In the 5G toB service scenario, CPE can provide a video surveillance backhaul service for one or more cameras (cameras), and can also provide access and data transmission functions for a remote control instruction service flow of a PLC. The camera and the PLC belong to the application terminal (or the terminal device) in FIG. 1. It may be understood that FIG. 2 shows only the camera and the PLC. This embodiment of this application is not limited thereto. The CPE may further provide a wireless access function for another application terminal (for example, a box in which an ellipsis is located in FIG. 2 may indicate another application terminal). As shown in FIG. 2, the CPE may provide data transmission of service flows (flows) for the cameras (for example, a camera 1 and a camera 2) and the PLC. For example, the CPE may provide data transmission of a flow 1 for the camera 1, the CPE may provide data transmission of a flow 2 for the camera 2, and the CPE may provide data transmission of a flow 3 for the PLC. For descriptions of network elements in FIG. 2, refer to the foregoing descriptions. Details are not described herein again.

FIG. 3 is a diagram of a network architecture according to an embodiment of this application.

This embodiment of this application provides a management architecture for operation and maintenance convergence of a wireless terminal. A wireless terminal equipment management function (wireless terminal equipment management function, WTEMF) is mainly introduced into a 3GPP logical management architecture, to manage a terminal device and support converged deployment with a network management system. As shown in FIG. 3, the network architecture may include but is not limited to a cross-domain management (cross-domain management) system, a radio network domain management (RAN domain management) system (that is, a RAN domain management system), and a core network (core network, CN) domain management (CN domain management) system.

The cross-domain management system may include a function entity for implementing cross-domain network management by an operator. As shown in FIG. 3, the cross-domain management system may manage both the wireless network domain management system and the core network domain management system. The wireless network domain management system may include a function entity that manages a network element (such as a gNB, a gNB-CU-CP, a gNB-CU-UP or a gNB-DU) in a wireless network. The core network domain management system may include a function entity that manages a network element in a core network. 5G is used as an example. As shown in FIG. 3, the core network domain management system may manage a 5G core control plane network function (5G core control plane network function, 5GC CNF) and a user plane function (user plane function, UPF). The 5GC CNF may include a control plane function network element of a 5G core network, such as an AMF, an SMF, a NEF, and an NWDAF. Each of the systems may include a plurality of management functions that provide a specific operation and maintenance management job, for example, a configuration management function that provides a network parameter configuration management service (network provisioning management service), and a performance management function that provides a network performance management service (performance assurance management service).

The WTEMF may be used for managing the CPE. For example, the WTEMF may be used for providing functions such as online registration, parameter configuration, performance management, and fault management for a terminal device connected to the CPE. As shown in FIG. 3, the WTEMF may be deployed in the RAN domain management system and/or the cross-domain network management system. For example, if the WTEMF is deployed in the cross-domain network management system, the WTEMF may manage the CPE by using an element management system (element management system, EMS). A "cross-domain WTEMF" in this application may be understood as a WTEMF integrated with the cross-domain management system or a WTEMF deployed in the cross-domain management system. A "domain WTEMF" in this application may be understood as a WTEMF integrated with the RAN domain management system or a WTEMF deployed in the RAN domain management system.

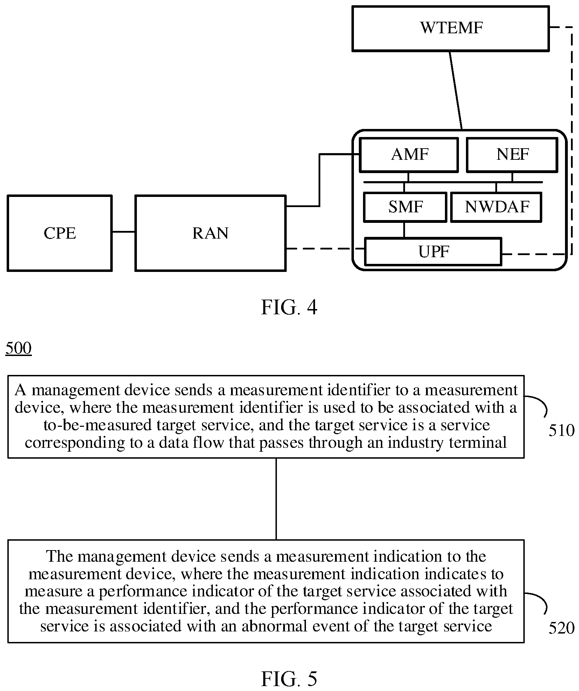

FIG. 4 is another diagram of a network architecture to which an embodiment of this application is applicable.

As shown in FIG. 4, a WTEMF may be independently deployed. It may be understood as that the WTEMF is not integrated with a management system, or it may be understood as that the cross-domain WTEMF and the domain WTEMF in FIG. 3 are integrated. For example, the network architecture may include but is not limited to CPE, a RAN, a WTEMF, an AMF, an SMF, a NEF, an NWDAF and a UPF. For descriptions of the network elements, refer to the foregoing descriptions. Details are not described herein again.

It should be understood that the foregoing network architecture applied to this embodiment of this application is merely an example of an architecture for description, and a network architecture applicable to embodiments of this application is not limited thereto. Any network architecture that can implement the functions of the foregoing network elements is applicable to embodiments of this application.

It should be further understood that functions or network elements in FIG. 1 to FIG. 4, for example, functions or network elements such as the WTEMF, AMF, SMF, UPF, PCF, UDM, NSSF and AUSF, may be understood as network elements configured to implement different functions, for example, may be combined into a network slice as needed. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

In a mobile network, an operator is a network communication service provider and is responsible for network construction and routine operation and maintenance management. Network operation and maintenance management includes operation and maintenance management functions such as network configuration management, performance management, and fault management. The fault management is one of key and difficult points of network management for the operator. Currently, main functions of the network fault management include fault information query, fault reporting, and fault information clearing, and the like. However, after receiving network fault alarm reporting information, a network management system cannot determine a network fault point at which a fault occurs (for example, the network management system cannot determine whether the fault is a network element fault or a link fault, or whether the fault occurs on a network element device in a radio access network or occurs on a network element device in a core network). To locate a specific step in which the fault occurs, the operator usually arranges an operation and maintenance management engineer to capture packets on different network element nodes or segment links of a network on site, and perform fault analytics and location based on data of the captured packets.

In some scenarios, for example, in the 5G toB scenario shown in FIG. 1, a large quantity of industry terminals (such as CPE and PLC) are deployed in a private network of an enterprise campus. A fault of the industry terminal such as the CPE usually occurs as a network abnormal fault. For example, a CPE memory leak occurs (for example, dynamically allocated heap memory in a program is not released or cannot be released due to a reason). As a result, physical resource block (physical resource block, PRB) usage of a base station reaches 100%. In this case, the network management system may detect a network fault of air interface congestion of a wireless network. However, the network fault is not caused by the wireless network itself, but caused by a CPE fault. Therefore, in this case, a fault point at which an exception actually occurs may not be located only by analyzing an air interface problem of the wireless network.

Currently, network fault management mechanisms defined in the 3rd generation partnership project (3rd generation partnership project, 3GPP) standard are mainly for network device fault information management, and do not support terminal device fault management.

To resolve E2E network fault management in the 5G toB scenario, a solution in a conventional technology is to collect performance data of a network and a terminal, and perform device-level fault diagnostic analytics on the network and the terminal. The architecture shown in FIG. 2 is used as an example. It is assumed that, in a time period or at a moment, a backhaul video freezing problem of a camera 1 occurs, and other services on the CPE are normal, and it is assumed that a cause of the service problem of the camera 1 is an uplink packet loss or a disorder of a video backhaul service flow of a flow 1. For the foregoing exception, if the conventional technology is used, uplink packet loss data (for example, a quantity of lost packets or a packet loss rate) at a CPE terminal granularity may be collected. In other words, an average quantity of lost packets or an average packet loss rate of data packets of all service flows (for example, the flow 1, a flow 2, and a flow 3) on the CPE is collected. The average quantity of lost packets or the average packet loss rate of data packets of all service flows on the CPE is collected. Therefore, the average quantity of lost packets or the average packet loss rate is used as a real quantity of lost packets or a real packet loss rate of data packets of each service flow, and a final diagnostic analytics result may be that the CPE is normal. Consequently, an E2E fault diagnostic analytics result is inaccurate, and the fault is difficult to locate.

In view of this, this application provides a solution in which performance data may be collected based on a finer granularity (that is, a service granularity, for example, a flow granularity in FIG. 2), and abnormal fault diagnostic analytics may be performed based on performance data of a service, to overcome the problem of the inaccurate result that is based on device-level performance data analytics, and support E2E fault demarcation and locating processing.

To facilitate understanding of embodiments of this application, terms used in this application are first briefly described.

1. Maintenance and testing collect network performance data based on service requirements, analyze network performance based on the collected data, evaluate a network performance status, and recognize a network abnormal fault. For example, a network domain (that is, fault demarcation, such as terminal, wireless, transmission, and core network faults) in which the fault occurs and a specific fault root cause (that is, fault locating) are included. The maintenance and testing described in embodiments of this application mainly focus on performing fault demarcation and locating analytics based on the network performance data. It may be understood that the foregoing is an example for description, and any manner of measuring the network performance data by using embodiments of this application falls within the protection scope of embodiments of this application. For example, the maintenance and test mentioned in embodiments of this application may alternatively be a temporary test.

2. An abnormal event can be considered as a fault, for example, a fault at the service granularity. In embodiments of this application, the abnormal event may be an abnormal event at the service granularity. For example, the abnormal event at the service granularity includes at least one of the following: video freezing corresponding to one or more services, or a control delay abnormality corresponding to one or more services. The video freezing corresponding to the one or more services may be: a phenomenon of erratic display or freezing occurs in a video played by a video service server. The control delay abnormality corresponding to the one or more services may be that a delay of a control command sent by a control service server to a terminal device arriving at the terminal device is long (for example, greater than an average data transmission delay), response time after the terminal device receives the command is long (for example, greater than average response duration), or the like.

3. A service may be divided based on a session granularity. For example, one session may correspond to one service. Transmission of service data may be performed through a service flow. A target service is used as an example. For example, FIG. 2 is used as an example. Transmission of data of the target service may be performed through the flow 1 between the CPE and the camera 1, transmission of data of the target service may be performed through the flow 2 between the CPE and the camera 2, or transmission of data of the target service may be performed through the flow 3 between the CPE and the PLC.

It may be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing briefly describes the terms used in this application, and details are not described in the following embodiments.

The following describes in detail a method provided in embodiments of this application with reference to the accompanying drawings. Embodiments provided in this application may be applied to the network architectures shown in FIG. 1 to FIG. 4. This is not limited.

Embodiments provided in this application are described below in detail with reference to the accompanying drawings.

FIG. 5 is a diagram of a measurement method 500 according to an embodiment of this application. The method 500 may include the following steps.

510: A management device sends a measurement identifier to a measurement device, where the measurement identifier is used to be associated with a to-be-measured target service, and the target service is a service corresponding to a data flow that passes through an industry terminal.

Accordingly, the measurement device receives the measurement identifier.

The target service is the service corresponding to the data flow that passes through the industry terminal, or it may be understood as that the target service is a to-be-measured service on the industry terminal. For example, the target service may be a service corresponding to a data flow that is sent to an application terminal and that passes through the industry terminal, or a service corresponding to a data flow that is sent by an application terminal and that passes through the industry terminal.

For example, the target service includes, for example, but is not limited to, a video service (for example, a video surveillance backhaul service) and a remote control instruction service.

The measurement identifier, for example, may also be referred to as a colored identifier, is used to be associated with the to-be-measured target service, and may be used to recognize the to-be-measured service. For example, the measurement identifier may be, for example, a special character or a special piece of data, or the measurement identifier may be an identifier of the target service (for example, an IP 5-tuple of the target service). Optionally, the method 500 further includes: The management device configures the measurement identifier for the target service. The measurement identifier is associated with the to-be-measured service, so that a to-be-measured service data packet associated with the measurement identifier can be quickly recognized.

The management device is a device that can be used to manage a terminal device. For example, the management device may be configured to implement functions such as online registration, parameter configuration, performance management, and fault management of the terminal device. In this embodiment of this application, the management device may be further configured to: configure the measurement identifier for the target service, and indicate the measurement device to perform measurement, and the like. For example, the management device may be the WTEMF described above.

The measurement device may be a device that associates the measurement identifier with the target service, or a device that measures the target service. For example, the measurement device includes one or more of the following: a core network element device (such as a UPF), a radio access network device (RAN), or customer-premises equipment (such as CPE) corresponding to the target service.

It may be understood that the management device and the measurement device are named for differentiation, and the names of the management device and the measurement device do not limit the protection scope of embodiments of this application. For example, the management device may also be referred to as a first device without a loss of generality, and the measurement device may also be referred to as a second device without a loss of generality.

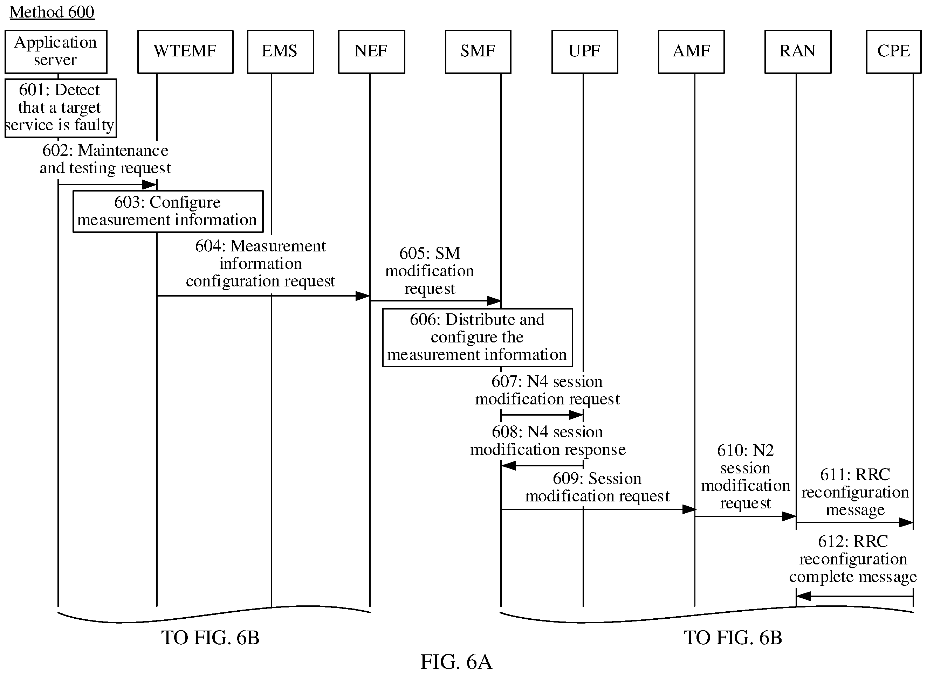

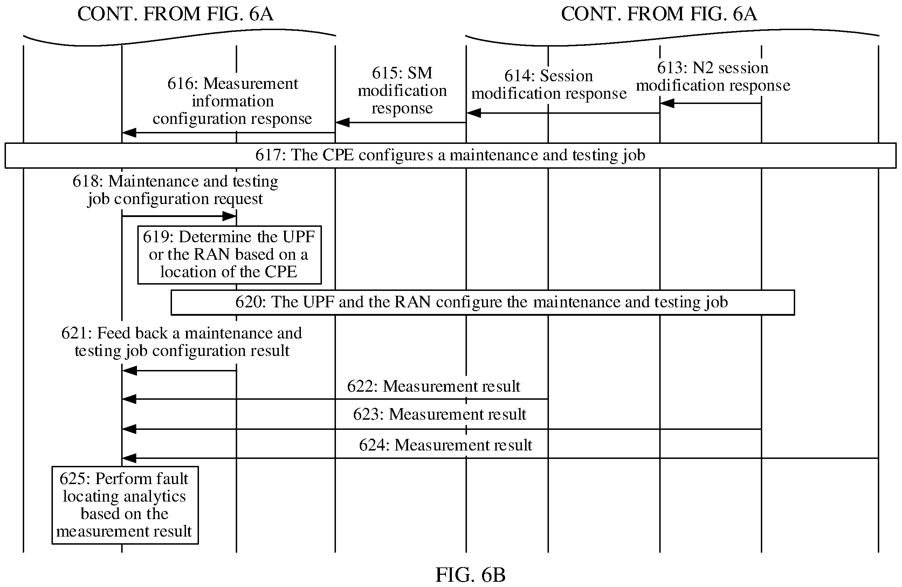

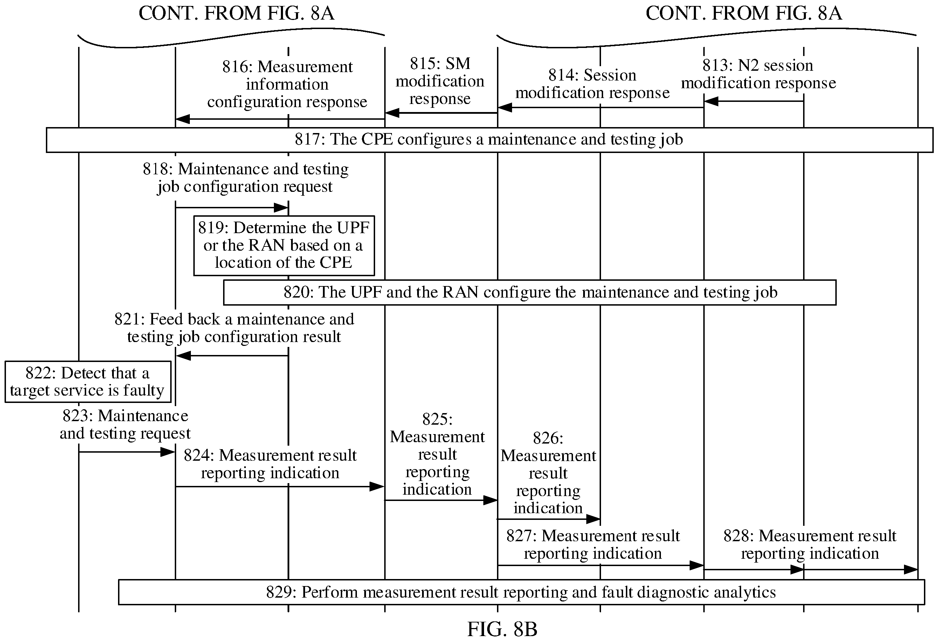

It may be understood that, that the management device sends the measurement identifier to the measurement device may include: The management device sends the measurement identifier to the measurement device directly, or the management device sends the measurement identifier to the measurement device via another device. Specifically, refer to the following possible procedures shown in FIG. 6A and FIG. 6B to FIG. 8A and FIG. 8B.

Optionally, the method 500 further includes: The measurement device associates the measurement identifier with the target service.

The associating the measurement identifier with the target service may be replaced with associating the measurement identifier with a data packet of the target service, or may be replaced with performing coloring processing on a data packet of the target service by using the measurement identifier. For example, that the coloring processing is performed on the data packet may refer to: The measurement identifier is filled (or referred to as added) in the data packet (for example, a header field). In this embodiment of this application, the measurement device associates the measurement identifier with the target service, or the measurement device performing coloring processing on the data packet of the target service, so that when the measurement device needs to measure performance data of the target service, the measurement device can quickly recognize the target service data packet associated with the measurement identifier.

There may be many implementations for associating the measurement identifier with the target service. In a possible implementation, the measurement identifier is filled (or referred to as added) in the data packet (for example, the header field) of the target service. Specifically, the following provides detailed descriptions with reference to the possible procedures shown in FIG. 6A and FIG. 6B to FIG. 8A and FIG. 8B.

520: The management device sends a measurement indication to the measurement device, where the measurement indication indicates to measure a performance indicator of the target service associated with the measurement identifier, and the performance indicator of the target service is associated with an abnormal event of the target service.

The measurement indication and the measurement identifier may be carried in a same piece of signaling, or may be carried in different pieces of signaling. This is not limited. If the measurement indication and the measurement identifier are carried in the same piece of signaling for transmission, this can reduce signaling overheads, and also help the measurement device learn, based on the one piece of signaling, that a performance indicator of the target service associated with the measurement identifier carried in the signaling is measured. If the measurement indication and the measurement identifier are carried in the different pieces of signaling for transmission, the measurement indication and the measurement identifier do not need to be bound in one piece of signaling for transmission, so that transmission is flexible. For example, the management device may first send the measurement identifier to the measurement device, and then send the measurement indication.

For example, the measurement identifier may also implement a function of the measurement indication, and the measurement identifier may indicate to measure the performance indicator of the target service associated with the measurement identifier. For example, the management device sends the measurement identifier to the measurement device. After receiving the measurement identifier, the measurement device associates, based on the measurement identifier, the measurement identifier with the target service, and measures the performance indicator of the target service associated with the measurement identifier.

The performance indicator of the target service indicates an indicator for measuring the target service. In this embodiment of this application, performance data collection may be performed for a specified key performance indicator (key performance indicator, KPI), and fault analytics is performed based on collected performance data. Optionally, the management device determines a performance indicator of a service based on an abnormal event of the service and/or a service type to which the service belongs.

For example, the performance indicator of the target service includes at least one of the following: a quantity of lost packets of an uplink packet data convergence protocol, a quantity of lost packets of a downlink packet data convergence protocol, an uplink air interface transmission delay, a downlink air interface transmission delay, a quantity of packet data convergence protocol packets whose uplink air interface transmission delays are greater than a first threshold, a downlink packet user plane function network element processing delay, a downlink packet terminal device processing delay, a downlink packet radio access network element device processing delay, a quantity of downlink N3 interface data packets whose delays are greater than a second threshold, or a downlink N3 interface data packet transmission delay. The threshold in this embodiment of this application, for example, the first threshold or the second threshold, may be preconfigured, may be specified in a protocol, or may be agreed on in advance. This is not limited. In addition, the first threshold or the second threshold may be a specific value, or may be a value range. This is not limited.

For example, the abnormal event of the target service includes at least one of the following: video freezing corresponding to the target service or a control delay abnormality corresponding to the target service.

Based on the foregoing technical solution, the management device may send, to the measurement device, the measurement identifier used to be associated with the to-be-measured target service, and the management device may further send, to the measurement device, the measurement indication indicating to measure the performance indicator of the target service associated with the measurement identifier. In this way, the measurement device can quickly recognize a to-be-measured service data packet based on whether the service is associated with the measurement identifier, to implement performance data collection at a finer granularity (that is, a service granularity). In this case, if fault diagnostic analytics needs to be performed, abnormal fault diagnostic analytics at the service granularity may be performed based on performance data of the service. In this way, a problem that a performance data analytics result based only on an air interface of a wireless network is inaccurate can be overcome, and in comparison with device-level fault diagnostic analytics, the foregoing technical solution improves accuracy of the fault diagnostic analytics. For example, if the measurement device performs device-level fault diagnostic analytics, an average performance indicator of all services on the measurement device is collected. Even if performance indicators of some services on the measurement device are abnormal, a final diagnostic analytics result may be that the measurement device is not abnormal because the average performance indicator is used as a real performance indicator of each service. Consequently, the fault diagnostic analytics result is inaccurate, and it is difficult to locate a fault. Therefore, through the foregoing technical solution, the problem of an inaccurate result based on device-level performance data analytics can be further overcome.

Optionally, the method 500 further includes: The management device sends one or more of the following information to the measurement device: a data packet type of the target service associated with the measurement identifier, the identifier of the target service, a CPE identifier corresponding to the target service, or an identifier of the terminal device. The one or more of the foregoing information and the measurement identifier and/or the measurement indication may be carried in a same piece of signaling, or may be carried in different pieces of signaling. This is not limited.

The data packet type of the target service associated with the measurement identifier indicates a type of a data packet that needs to be associated with the measurement identifier (or referred to as a data packet on which coloring processing needs to be performed). The data packet type may include an uplink data packet and/or a downlink data packet. In a possible implementation, the management device may determine, based on the abnormal event of the target service, the type of the data packet that needs to be associated with the measurement identifier. For example, if the abnormal event of the target service is video freezing, the type of the data packet that needs to be associated with the measurement identifier may be the uplink data packet. For another example, if the abnormal event of the target service is that a control delay is excessively long, the type of the data packet that needs to be associated with the measurement identifier may be the downlink data packet.

The identifier of the target service may be used to identify (or recognize) the target service. For example, the identifier of the target service is an IP 5-tuple (IP 5-tuple). The scenario shown in FIG. 2 is used as an example. Assuming that the target service is a flow 1, the identifier of the target service may include an IP 5-tuple of the flow 1, that is, the following information corresponding to the flow 1: a source IP (source IP) address, a source port (source port), a destination IP (destination IP) address, a destination port (destination port), and a layer 4 communication protocol (the layer 4 protocol).

The CPE identifier (CPE Id) may be used to identify (or recognize) the CPE. For example, the CPE Id may be any one of the following: an equipment serial number (equipment serial number, ESN) of the CPE, an IP address of the CPE, or a globally unique temporary subscriber identity (globally unique temporary UE identity, GUTI) of the CPE.

The identifier (for example, denoted as a DeviceId) of the terminal device may be used to identify (or recognize) a device to which the target service belongs or a device on which the abnormal event occurs.

The foregoing information may be collectively referred to as measurement information, or may also be referred to as a colored policy (ColoredPolicy). In other words, the measurement information may include at least one of the measurement identifier, the data packet type of the target service associated with the measurement identifier, the identifier of the target service, the CPE identifier corresponding to the target service, and the identifier of the terminal device. In a possible implementation, the management device may first configure the measurement information, and then send the measurement information to the measurement device. Alternatively, another device may configure the measurement information, and then send the measurement information to the management device, so that the management device sends the measurement information to the measurement device.

Use of the foregoing information is described in detail below with reference to the possible procedures shown in FIG. 6A and FIG. 6B to FIG. 8A and FIG. 8B.

Optionally, in step 510, that the management device sends the measurement identifier to the measurement device may include the following several situations.

In a first possible situation, after receiving a maintenance and testing request for performing maintenance and testing on the target service, the management device sends the measurement identifier to the measurement device. Based on this situation, when learning that the maintenance and testing need to be performed on the target service, the management device may send the measurement identifier to the measurement device. The maintenance and testing request may be used to request to perform maintenance and testing on a service on which the abnormal event occurs. Optionally, the maintenance and testing request includes one or more of the following information: the abnormal event of the target service, the identifier of the terminal device, or the identifier of the target service. This situation is described in detail below with reference to the possible procedure shown in FIG. 6A and FIG. 6B.

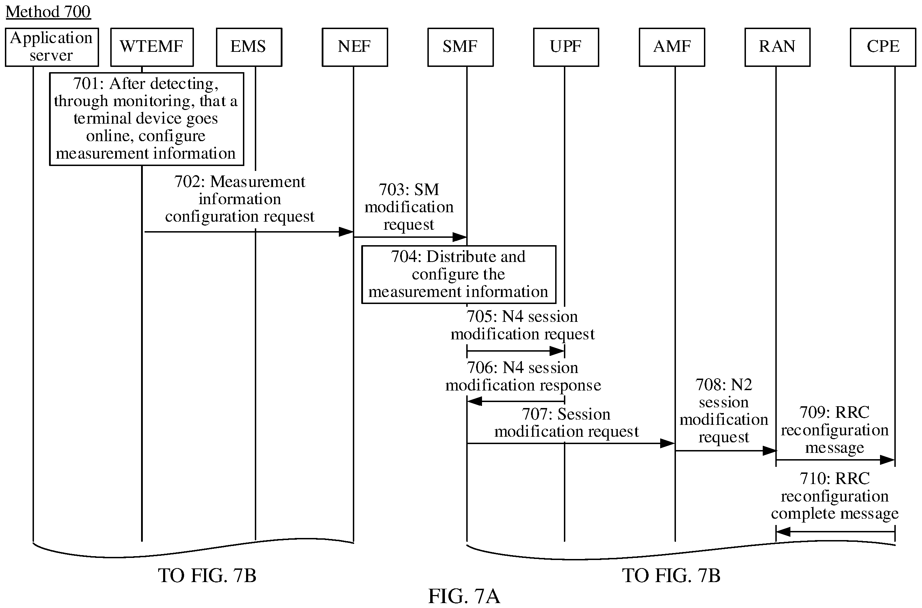

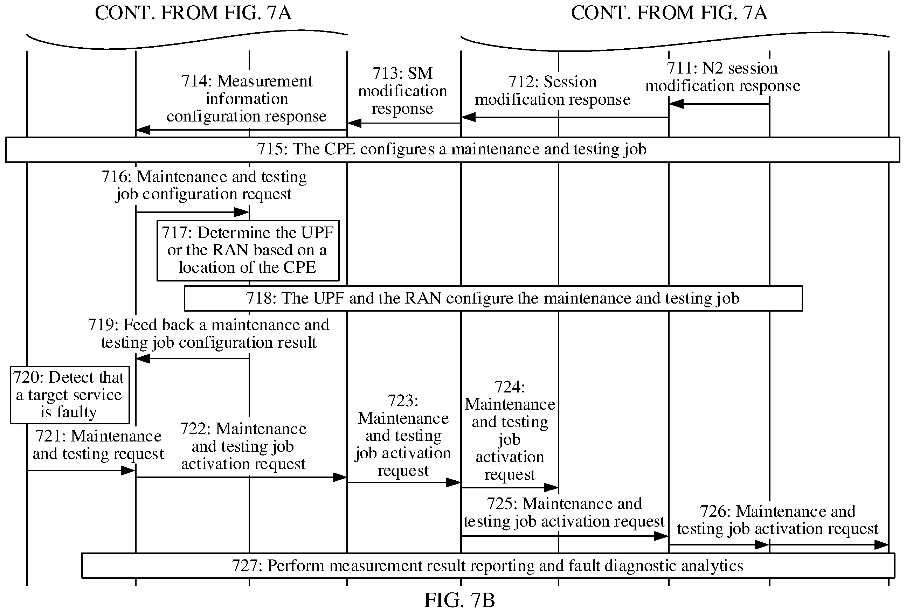

In a second possible situation, after receiving a monitoring request for monitoring the performance indicator of the target service, the management device sends the measurement identifier to the measurement device. Based on this situation, when learning that the performance indicator of the target service needs to be monitored, the management device may send the measurement identifier to the measurement device. The monitoring request may be used to request to monitor performance indicators of some services. It may be understood that the maintenance and testing request is used in a scenario in which the abnormal event has occurred in a service, and the monitoring request is used in a scenario in which no abnormal event has occurred in the service. Optionally, the monitoring request includes one or more of the following information: a service type of the target service, the identifier of the terminal device, or the identifier of the target service. This situation is described in detail below with reference to the possible procedure shown in FIG. 7A and 7B.

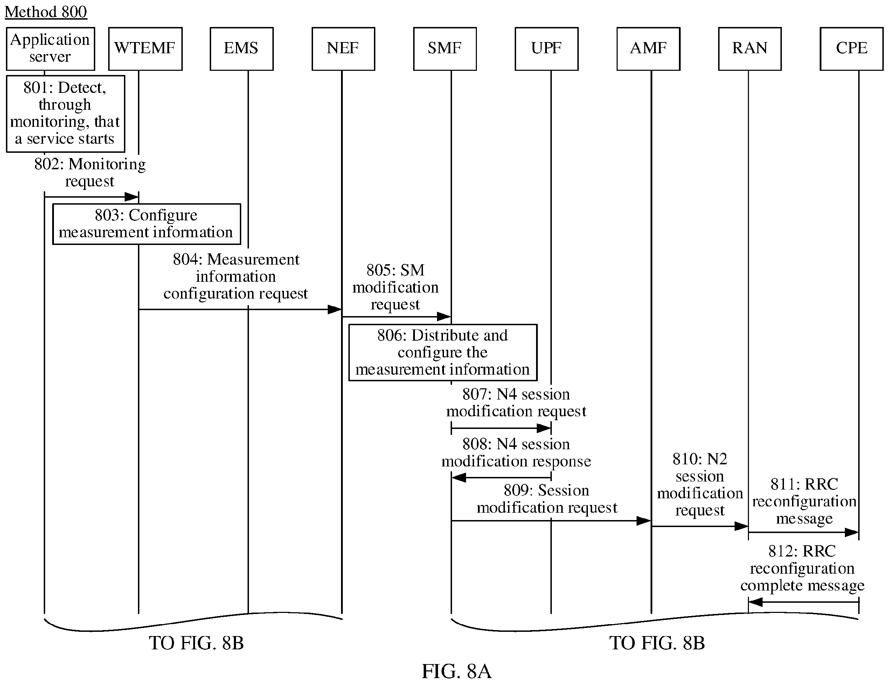

A third possible situation includes: After detecting, through monitoring, that the terminal device goes online, the management device sends the measurement identifier to the measurement device. Based on this situation, the management device may send the measurement identifier to the measurement device after learning that the terminal device goes online or after the terminal device performs transmission of data of the target service. This situation is described in detail below with reference to the possible procedure shown in FIG. 8A and FIG. 8B.

Optionally, the measurement device feeds back, to the management device, whether the measurement identifier is already associated with the target service. The measurement device may feed back a configuration result of the measurement identifier and the measurement information to the management device, so that the management device can send the measurement indication when the measurement device already associates the measurement identifier with the target service successfully.

Optionally, if the measurement device already associates the measurement identifier with the target service successfully, or successfully configures the measurement identifier and the measurement information, the management device may further receive an address of the measurement device. In this way, a route for subsequently sending a related message by the management device to the measurement device may be implemented.

Optionally, in step 520, that the management device sends the measurement indication to the measurement device may include the following cases.

In a first possible case, after receiving the maintenance and testing request for performing maintenance and testing on the target service, the management device sends the measurement indication to the measurement device. Based on this case, when learning that the maintenance and testing need to be performed on the target service, the management device may send the measurement indication to the measurement device, so that the measurement device measures the performance indicator of the target service associated with the measurement identifier.

Optionally, in this case, the management device further sends one or more of the following information to the measurement device: a measurement result reporting indication of the target service, the performance indicator of the target service, a maintenance and testing job identifier, the measurement identifier, measurement time of the target service, a measurement manner of the measurement device, or an address of the measurement device.

The measurement result reporting indication of the target service indicates to report a measurement result of the target service. For example, if the measurement device receives the measurement indication and the measurement result reporting indication, the measurement device measures the performance indicator of the target service based on the measurement indication, and reports the measurement result based on the measurement result reporting indication.

The measurement time of the target service indicates information related to time at which the measurement device measures the performance indicator of the target service. For example, the measurement time of the target service includes measurement start time, measurement end time, and the like.

The measurement manner of the measurement device indicates a manner of performing measurement by a device that performs data measurement, for example, may include instant measurement and delay measurement. For example, if the measurement device receives the measurement indication and the manner of performing measurement by the device that performs the data measurement, and the manner of performing measurement by the device that performs the data measurement is the instant measurement, the measurement device immediately starts to measure the performance indicator of the target service based on the measurement indication and the manner of performing measurement by the device that performs the data measurement.

For example, the first possible case and the first possible situation may be used in combination. For example, the management device receives the maintenance and testing request for performing maintenance and testing on the target service, and the management device sends the measurement identifier to the measurement device based on the maintenance and testing request. The measurement device associates the measurement identifier with the target service. After learning that the measurement device already associates the measurement identifier with the target service successfully, the management device sends the measurement indication to the measurement device. The measurement device measures the performance indicator of the target service based on the measurement indication. For another example, the management device receives the maintenance and testing request for performing maintenance and testing on the target service, and the management device sends the measurement identifier and the measurement indication to the measurement device based on the maintenance and testing request. The measurement device associates the measurement identifier with the target service, and after successfully associating the measurement identifier with the target service, the measurement device measures the performance indicator of the target service. The foregoing is an example for description, and this embodiment of this application is not limited thereto. For example, the management device receives the maintenance and testing request for performing maintenance and testing on the target service, the management device first sends the measurement identifier to the measurement device, and then the management device sends the measurement indication to the measurement device.

For another example, the first possible case and the second possible situation may also be used in combination. For example, the management device receives the monitoring request for monitoring the target service, and the management device sends the measurement identifier to the measurement device based on the monitoring request. The measurement device associates the measurement identifier with the target service. After learning that the measurement device already associates the measurement identifier with the target service successfully, the management device may temporarily not send the measurement indication to the measurement device. The management device receives the maintenance and testing request for performing maintenance and testing on the target service, and the management device sends the measurement indication to the measurement device based on the maintenance and testing request. The measurement device measures the performance indicator of the target service based on the measurement indication.

For still another example, the first possible case and the third possible situation may also be used in combination. For example, after detecting, through monitoring, that the terminal device goes online, the management device sends the measurement identifier to the measurement device. The measurement device associates the measurement identifier with the target service. After learning that the measurement device already associates the measurement identifier with the target service successfully, the management device may temporarily not send the measurement indication to the measurement device. The management device receives the maintenance and testing request for performing maintenance and testing on the target service, and the management device sends the measurement indication to the measurement device based on the maintenance and testing request. The measurement device measures the performance indicator of the target service based on the measurement indication.

In a second possible case, after receiving the monitoring request for monitoring the target service, the management device sends the measurement indication to the measurement device. Based on this case, when learning that the performance indicator of the target service needs to be monitored, the management device may send the measurement indication to the measurement device, so that the measurement device measures the performance indicator of the target service associated with the measurement identifier.

Optionally, in this case, the management device further sends one or more of the following information to the measurement device: the performance indicator of the target service, the measurement identifier, the measurement time of the target service, the address of the measurement device, a measurement result cache indication of the target service, the measurement manner of the measurement device, or measurement result cache time of the target service.

The measurement result cache indication of the target service indicates to cache performance data obtained through measurement statistics collection. For example, if the measurement device receives the measurement indication and the measurement result cache indication, the measurement device measures the performance indicator of the target service based on the measurement indication, and caches a measurement result based on the measurement result cache indication.

The measurement result cache time of the target service indicates time information (for example, a time length) for locally caching the performance data obtained through the measurement statistics collection. For example, if the measurement device receives the measurement indication and the measurement result cache time, the measurement device measures the performance indicator of the target service based on the measurement indication, and caches a measurement result for specific time based on the measurement result cache time. For example, if the measurement device does not receive the measurement result reporting indication from the management device within a preset time period (for example, before the cache time expires), the measurement device deletes the cached measurement result, to save storage space.

For example, the second possible case and the second possible situation may be used in combination. For example, the management device receives the monitoring request for monitoring the target service, and the management device sends the measurement identifier to the measurement device based on the monitoring request. The measurement device associates the measurement identifier with the target service. After learning that the measurement device already associates the measurement identifier with the target service successfully, the management device sends the measurement indication to the measurement device. The measurement device measures the performance indicator of the target service based on the measurement indication. For another example, the management device receives the monitoring request for monitoring the target service, and the management device sends the measurement identifier and the measurement indication to the measurement device based on the monitoring request. The measurement device associates the measurement identifier with the target service, and after successfully associating the measurement identifier with the target service, the measurement device measures the performance indicator of the target service.

For another example, the second possible case and the third possible situation may be used in combination. For example, after detecting, through monitoring, that the terminal device goes online, the management device sends the measurement identifier to the measurement device. The measurement device associates the measurement identifier with the target service. After learning that the measurement device already associates the measurement identifier with the target service successfully, the management device may temporarily not send the measurement indication to the measurement device. The management device receives the monitoring request for monitoring the target service, and the management device sends the measurement indication to the measurement device based on the monitoring request. The measurement device measures the performance indicator of the target service based on the measurement indication.

The second possible case is described in detail below with reference to the possible procedure shown in FIG. 8A and FIG. 8B.

It may be understood that the foregoing two possible cases are examples for description, and this embodiment of this application is not limited thereto. For example, after receiving information that the measurement identifier is successfully associated with the target service and that is fed back by the measurement device, the management device may alternatively send the measurement indication to the measurement device. Based on this case, when learning that the measurement device already associates the measurement identifier with the target service successfully, the management device may send the measurement indication to the measurement device, so that the measurement device measures the performance indicator of the target service associated with the measurement identifier.

For ease of understanding, the following describes, with reference to FIG. 6A and FIG. 6B to FIG. 8A and FIG. 8B, a possible procedure applicable to the foregoing solution by using the industry terminal as the CPE. For example, embodiments in FIG. 6A and FIG. 6B to FIG. 8A and FIG. 8B may be applied to the network architectures shown in FIG. 1 to FIG. 4. For example, the CPE in FIG. 6A and FIG. 6B to FIG. 8A and FIG. 8B may correspond to the CPE in the network architectures shown in FIG. 1 to FIG. 4. For another example, a RAN in FIG. 6A and FIG. 6B to FIG. 8A and FIG. 8B may correspond to the RAN device in the network architectures shown in FIG. 1, FIG. 3, and FIG. 4, or a RAN in FIG. 6A and FIG. 6B to FIG. 8A and FIG. 8B may correspond to the gNB in the network architecture shown in FIG. 2. For still another example, an AMF, an SMF, a NEF, and a UPF in FIG. 6A and FIG. 6B to FIG. 8A and FIG. 8B may correspond to the core network devices in the network architectures shown in FIG. 1 to FIG. 4. For yet another example, a WTEMF in FIG. 6A and FIG. 6B to FIG. 8A and FIG. 8B may correspond to the WTEMF in the network architectures shown in FIG. 3 and FIG. 4. In the following possible procedures, it is assumed that a measurement identifier (or referred to as a colored identifier) and measurement information (or referred to as a colored policy) are configured for a target service, a management device is the WTEMF, and a measurement device includes the UPF, the RAN, and the CPE.

FIG. 6A and FIG. 6B are a schematic flowchart of a measurement method according to an embodiment of this application. The method 600 shown in FIG. 6A and FIG. 6B is applicable to the first possible situation in the foregoing method 500. The method 600 shown in FIG. 6A and FIG. 6B may include the following steps.

601: An application server detects that a target service is faulty.

That the application server detects that the target service is faulty may be that the application server detects that an abnormal event occurs in the target service.

For example, the application server is a video server or a control server in FIG. 2.

For example, a service fault may include problems such as video freezing, erratic display, and a long control delay.

For example, FIG. 2 is used as an example. The control server detects that a transmission delay of data is long, and the control server learns, based on an IP address of the data whose transmission delay is long, that transmission of the data is performed through a flow 3 between CPE and a PLC. Therefore, it may be determined that a service corresponding to the flow 3 between the CPE and the PLC is faulty. For a specific manner of detecting, by the application server, that the service is faulty, refer to a conventional technology. This is not limited in this embodiment of this application.

If the application server detects that a service is faulty, the application server may initiate a maintenance and testing request for the corresponding service to a WTEMF, to trigger the WTEMF to perform measurement on performance of a specified service, and analyze and diagnose a network fault based on performance data of the service.

For example, for video freezing and erratic display, measurement statistics may be collected on an uplink packet loss status of video services. For example, packet loss statuses on an air interface link and N3 link are measured, to recognize a network step in which the fault occurs. The N3 link indicates an N3 interface link between a RAN and a UPF. For example, packet loss measurement is performed on an uplink packet data convergence protocol (packet data convergence protocol, PDCP) packet (that is, an air interface link data packet) and an uplink general packet radio service (general packet radio service, GPRS) tunneling protocol user plane (GPRS tunneling protocol user plane, GTPU) (that is, an N3 link data packet), to determine a status of each segment link of the video service, and assist in network fault demarcation.

For another example, for a remote control delay problem, the measurement statistics may be collected on a transmission delay of a downlink packet of a remote control service, including transmission delays of the air interface link and N3 link, to determine a status of each segment link of the remote control service, recognize the network step in which the fault occurs, and assist in the network fault demarcation.

The foregoing is an example for description. For specific operations of analyzing and diagnosing the network fault based on the performance data of the service, refer to the conventional technology. This is not limited herein.

602: The application server sends a maintenance and testing request to the WTEMF.

The application server detects that the target service is faulty. Therefore, the application server sends the maintenance and testing request to the WTEMF.

Optionally, the maintenance and testing request includes one or more of the following information: an identifier (a DeviceId) of a device on which an abnormal event occurs, an abnormal event, or a target service identifier.

The DeviceId may be used to identify (or recognize) the device on which the abnormal event occurs. The DeviceId may be, for example, an ID of the device, for example, a camera Id or a PLC Id, or may be a serial number of the device. This is not limited. For example, the application server may learn of the ID of the device by using an IP address of data whose transmission is performed between the application server and the device on which the abnormal event occurs.

The abnormal event, or referred to as a maintenance and testing problem type (eventType), may be used to identify a type of the abnormal event of the service. For example, the abnormal event is video freezing. For another example, the abnormal event is a long control delay.

The target service identifier may be used to identify the target service on which an abnormality occurs. In the following embodiments, an example in which the target service identifier is an IP 5-tuple is mainly used for description.

In a possible implementation, the application server sends the maintenance and testing request to the WTEMF by invoking a management service (management service, MnS) provided by the WTEMF. For example, for the management service provided by the WTEMF, refer to a definition in Table 1.

**Table 1**

| MnS name | MnS operation | Operation parameter (Operation Parameter) |
|---|---|---|
| Fault diagnostics management service (FaultDiagnostics MnS) | Job creation operation (Job Create Operation) | Input (Input): DeviceId, IP 5-tuple, eventType |
| | | Output (Output): DeviceId, DiagnosticsJob Id, status (success, failure) |

The job creation operation in Table 1 may also be denoted as, for example, a diagnostics job creation operation (DiagnosticsJob_Create Operation), or may be denoted as a maintenance and testing job creation operation.

In Table 1, the status indicates the status, that is, a diagnostic result. In a possible case, if the status is success (success), it indicates that fault diagnostic analytics is successful. In another possible case, if status is failure (failure), it indicates that the fault diagnostic analytics fails.

In Table 1, the DiagnosticsJob Id indicates a diagnostics job identifier (DiagnosticsJob Id). For example, the application server may send the maintenance and testing request to the WTEMF. The maintenance and testing request is used to perform the fault diagnostic analytics on the abnormal event of the target service. In this case, the fault diagnostic analytics on the abnormal event may be considered as a diagnostics job (or referred to as a maintenance and testing job).

The output in Table 1 indicates that the WTEMF feeds back a result of the maintenance and testing request to the application server. For example, after the application server sends the maintenance and testing request to the WTEMF, the WTEMF performs some operations (for example, steps 603 to 625 in this embodiment of this application), to perform fault diagnostic analytics on an abnormal event corresponding to the maintenance and testing request; and after the fault diagnostic analytics, the WTEMF feeds back the result of the maintenance and testing request to the application server.

It may be understood that Table 1 is merely an example. This is not limited in this embodiment of this application. For example, the management service provided by the WTEMF may alternatively be a management service of another name. For another example, Table 1 may further include more parameters.

603: The WTEMF configures measurement information.

Optionally, if the maintenance and testing request in step 602 includes the DeviceId, the WTEMF may determine, based on the DeviceId, an identifier of CPE (CPE Id) connected to a terminal identified by the DeviceId. The CPE Id is an identifier for recognizing the CPE. For example, the CPE Id may be any one of the following: an ESN of the CPE, an IP address of the CPE, or a 5G-GUTI of the CPE.

Optionally, if the maintenance and testing request in step 602 includes the eventType, the WTEMF may determine, based on the eventType, a KPI of the target service that needs to be measured, and/or a type of a data packet that needs to be associated with a measurement identifier. The type of the data packet that needs to be associated with the measurement identifier may alternatively be a type of a data packet (for example, may be denoted as a colored type (ColoredType)) that needs to be colored. The following uses the type of the data packet that needs to be colored as an example for description. For example, the type of the data packet that needs to be colored includes, for example, an uplink data packet and/or a downlink data packet. A correspondence between the eventType and the KPI of the target service may be shown in Table 2.

**Table 2**

| eventType | KPI of the target service |
|---|---|
| Video freezing | Quantity of lost uplink PDCP packets |
| | Quantity of lost uplink GTPU packets |
| Excessively-long control delay | Quantity of downlink air interface long delay packets |
| | Quantity of downlink N3 long delay packets |
| | Downlink air interface transmission delay |
| | Downlink N3 transmission delay |
| | Downlink packet UPF processing delay |
| | Downlink packet CPE processing delay |
| | Downlink packet RAN processing delay |

The quantity of downlink air interface long delay packets may include, for example, a quantity of packets whose downlink air interface delays are greater than a threshold. The quantity of downlink N3 long delay packets may include, for example, a quantity of packets whose downlink N3 delays are greater than a threshold. Table 1 is used as an example. For example, if the maintenance and testing request includes the eventType, and the eventType is video freezing, the WTEMF may determine, based on the eventType, to measure one or more of the following: the quantity of lost uplink PDCP packets or the quantity of lost uplink GTPU packets. For another example, if the maintenance and testing request includes the eventType, and the eventType is excessively-long control delay, the WTEMF may determine, based on the eventType, to measure one or more of the following: the quantity of downlink air interface long delay packets, the quantity of downlink N3 long delay packets, the downlink air interface transmission delay, the downlink N3 transmission delay, the downlink packet UPF processing delay, the downlink packet CPE processing delay, or the downlink packet RAN processing delay.

In step 603, the WTEMF may allocate the measurement identifier (for example, denoted as a FlowId) to the target service, and configure measurement information (for example, denoted as a ColoredPolicy) of the target service. The measurement identifier is used to recognize the target service, and may be, for example, a special character or a special piece of data, or may be the identifier of the target service (for example, the IP 5-tuple of the target service). This is not limited. For example, related parameters of the measurement information may be shown in Table 3.

**Table 3**

| Measurement information | Policy parameter | Parameter attribute | Parameter description |
|---|---|---|---|
| ColoredPolicy | CPE Id | M | Identifier of the CPE connected to the terminal |
| | ColoredType | M | Type of the data packet that needs to be colored |
| | Uplink data packet measurement information (for example, denoted as ULpacketcoloredInfo) | | |
| | > IP 5-tuple | M | Identifier of a service on which the abnormal event occurs |
| | > DeviceId | CM | Terminal identifier corresponding to the service on which the abnormal event occurs |
| | > FlowId | M | Measurement identifier |
| | Downlink data packet measurement information (for example, denoted as DLpacketcoloredInfo) | | |
| | > IP 5-tuple | M | Identifier of the service on which the abnormal event occurs |
| | > FlowId | M | Measurement identifier |

If the parameter attribute is "M", it indicates that the parameter is mandatory. If the parameter attribute is "CM", it indicates that the parameter is conditionally mandatory. As shown in Table 3, the DeviceId is conditionally mandatory. For example, if an uplink packet loss occurs, for example, the service fault is video freezing or erratic display, the DeviceId is mandatory.

It may be understood that the measurement information may include the ULpacketcoloredInfo and/or the DLpacketcoloredInfo. For example, the WTEMF may determine, based on the abnormal event of the target service, whether the measurement information includes the ULpacketcoloredInfo, the DLpacketcoloredInfo, or the ULpacketcoloredInfo and the DLpacketcoloredInfo. For example, if the abnormal event of the target service is video freezing, the measurement information includes the ULpacketcoloredInfo. For another example, if the abnormal event of the target service is excessively-long control delay, the measurement information includes the DLpacketcoloredInfo.

604: The WTEMF sends a measurement information configuration request to a NEF.

The measurement information configuration request may carry the measurement information. For content of the measurement information, refer to Table 3.

The WTEMF may trigger, by invoking a control plane service interface of the NEF, a core network to start a control plane signaling procedure, to configure the measurement information of the target service on each related network element in a network.

In a possible implementation, the measurement information configuration request may be an Nnef interface application policy creation request (Nnef_ApplyPolicy_Create request) of the NEF. It should be understood that network elements may exchange information based on a service-based interface. For example, an Nnef interface is a service-based interface for interaction between the NEF and another network element. A message whose transmission is performed between the NEF and another network element based on the Nnef interface may be, for example, the foregoing Nnef_ApplyPolicy_Create request message. Therefore, in this embodiment of this application, an input parameter of the Nnef_ApplyPolicy _Create request may be enhanced to support policy parameter transmission in Table 3.

The foregoing is an example for description, and this embodiment of this application is not limited thereto. For example, a new NEF service interface may be defined to implement measurement information configuration.

605: The NEF sends a session management (session management, SM) modification request to an SMF.

The SM modification request may carry the measurement information.

After receiving measurement information that is of the target service and that is delivered by the WTEMF, the NEF may send the measurement information of the target service to another network element through a PDU session modification (PDU session modification) procedure of the core network. For example, similar to a PDU session modification procedure triggered by a QoS policy update, after receiving the measurement information that is of the target service and that is delivered by the WTEMF, the NEF triggers the PDU session modification procedure, and configures the measurement information of the target service on each related network element in the network.

In a possible implementation, the SM modification request may be an Nsmf interface PDU session update session management context request (Nsmf_PDUSession_UpdateSMContext request) of the SMF. In this embodiment of this application, an input parameter of the Nsmf_PDUSession_UpdateSMContext request may be enhanced to support the policy parameter transmission in Table 3. Details are shown in Table 4.

**Table 4**

| Service name (Service Name) | Service operation (Service Operations) | Operation parameter | Network element (Consumer(s)) |
|---|---|---|---|
| Nsmf_PDUSession | UpdateSMContext | Input: ColoredPolicy Output: status | NEF |

The input parameter in Table 4 is an optional parameter. For the input parameter ColoredPolicy in Table 4, refer to Table 3.

The output in Table 4 indicates that the SMF feeds back a configuration result of the measurement information to the NEF, and the output corresponds to step 615.

It should be noted that the parameters shown in Table 4 are for example description, and the input parameter of the Nsmf_PDUSession_UpdateSMContext request may further include another parameter. This is not limited herein.

606: The SMF distributes and configures the measurement information.

After receiving the measurement information of the target service from the NEF, the SMF may trigger the PDU session modification procedure, to implement distribution and configuration of the measurement information.

For example, the SMF may perform policy distribution based on a value of the ColoredType in the measurement information. For example, if the value of the ColoredType is UL, corresponding ULpacketcoloredInfo may be sent to the CPE by using non-access stratum (non-access stratum, NAS) signaling. If the value of the ColoredType is DL, corresponding DLpacketcoloredInfo may be sent to the UPF by using N4 interface signaling. If the value of the ColoredType includes DL and UL, the corresponding DLpacketcoloredInfo may be sent to the UPF by using N4 interface signaling, and the corresponding ULpacketcoloredInfo may be sent to the CPE by using NAS signaling.

607: The SMF sends an N4 session modification request to the UPF.

If the value of the ColoredType includes DL, the method 600 may include steps 607 and 608. In step 607, the SMF sends the DLpacketcoloredInfo to the UPF, and the DLpacketcoloredInfo may be, for example, carried in an N4 session modification request (N4 session modification request) of an N4 interface.

The N4 session modification request includes the DLpacketcoloredInfo (refer to Table 3, to be specific, includes the identifier IP 5-tuple of the target service and the measurement identifier FlowId).

After receiving the N4 session modification request, the UPF processes the target service based on the measurement information, in other words, performs coloring processing on a data packet of the target service, or configures the measurement information.

For example, the UPF determines, based on whether the N4 session modification request carries information #1, whether to process the target service based on the measurement information. The information #1 indicates to process the target service based on the measurement information. For example, if the N4 session modification request includes the DLpacketcoloredInfo and the information #1, after receiving the N4 session modification request, the UPF determines to process the target service based on the measurement information.

For another example, the UPF determines, based on whether the N4 session modification request carries the DLpacketcoloredInfo, whether to process the target service based on the measurement information. For example, if the N4 session modification request includes the DLpacketcoloredInfo, after receiving the N4 session modification request, the UPF determines to process the target service based on the measurement information.

For another example, the UPF determines, based on a value of the information #1 carried in the N4 session modification request, whether to process the target service based on the measurement information. For example, the information #1 is one bit, and a value range of the information #1 is 0 or 1. If the value of the information #1 is "1", it may be considered that the information #1 indicates to process the target service based on the measurement information. If the value of the information #1 is "0", it may be considered that the information #1 indicates that the target service does not need to be processed based on the measurement information.

The foregoing is an example for description, and this embodiment of this application is not limited thereto.

It is assumed that after receiving the N4 session modification request, the UPF determines to process the target service based on measurement information. In this case, when receiving a downlink data packet of the target service, the UPF may process the downlink data packet of the target service based on the measurement information.

Processing (in other words, coloring processing) performed by the UPF on a data packet (for example, the downlink data packet of the target service) mainly refers to: The UPF adds the measurement identifier to the data packet. For example, when the UPF receives the downlink data packet of the target service identified by the IP 5-tuple in the measurement information, the UPF performs QoS marking (QoS marking), for example, adds a QoS Flow identifier (QoS flow identifier, QFI), further performs coloring processing on the downlink data packet (for example, a GTPU packet), and then sends a downlink data packet obtained through the coloring processing to the RAN through an N3 interface. That the coloring processing is performed on the downlink data packet refers to: The downlink data packet is associated with the measurement identifier, to be specific, the measurement identifier is filled (or referred to as added) in the downlink data packet (for example, a header field). That the downlink data packet is the GTPU packet is used as an example. As shown in Table 5, the measurement identifier (FlowId) may be filled in a reserved bit (that is, a field corresponding to 12 Octet) of a GTPU packet header. In this way, when the target service needs to be measured subsequently, it may be determined, based on the measurement identifier of the GTPU packet header, to measure the GTPU packet.

**Table 5**

| Octets (Octets) | Bits (Bits) | | | | | | | |
|---|---|---|---|---|---|---|---|---|
| | 8 | 7 | 6 | 5 | 4 | 3 | 2 | 1 |
| 1 | Protocol version (Version) | | | PT/Protocol type | (*) | E/Extension header marker | S/Sequence number marker | PN/PDU sequence number marker |
| 2 | Message type (Message Type) | | | | | | | |
| 3 | Message length (Length) | | | | | | | |
| 4 | Length | | | | | | | |
| 5 | Tunnel endpoint identifier (Tunnel Endpoint Identifier) | | | | | | | |
| 6 | Tunnel Endpoint Identifier | | | | | | | |
| 7 | Tunnel Endpoint Identifier | | | | | | | |
| 8 | Tunnel Endpoint Identifier | | | | | | | |
| 9 | Packet sequence number (Sequence Number, SN) | | | | | | | |
| 10 | Sequence Number | | | | | | | |
| 11 | N-PDU Number | | | | | | | |
| 12 | FlowId | | | | | | | |

608: The UPF sends an N4 session modification response to the SMF.

In a possible implementation, the UPF sends an N4 session modification response (N4 session modification response) of the N4 interface to the SMF. The N4 session modification response is used to feed back a configuration result (for example, the measurement information is successfully configured or the measurement information fails to be configured) of the measurement information to the SMF. Further, optionally, if the measurement information fails to be configured, a reason for the configuration failure may be further fed back.

609: The SMF sends a session modification request to the AMF.

If the value of the ColoredType includes UL, the method 600 may include steps 609 to 614. To be specific, the SMF sends the ULpacketcoloredInfo to the AMF, and the ULpacketcoloredInfo may be, for example, carried in the session modification request. In this way, the SMF may send the ULpacketcoloredInfo to the CPE by using the AMF.

The session modification request includes the ULpacketcoloredInfo (refer to Table 3, to be specific, includes the CPE Id, the Device Id, the identifier IP 5-tuple of the target service, and the measurement identifier FlowId). Optionally, the session modification request includes the information #1. For the information #1, refer to the descriptions in step 607. A difference lies in that a case of the downlink data packet is described in step 607, and a case of the uplink data packet is described in step 609. For brevity, details are not described herein again.

In a possible implementation, the session modification request in step 609 may be Namf interface communication N1N2 information transmission (Namf_Communication_N1N2MessageTransfer) of the AMF.

610: The AMF sends an N2 session modification request to the RAN.

In a possible implementation, the AMF sends an N2 session modification request (for example, a PDU session resource modify request) of an N2 interface to the RAN.

The N2 session modification request includes the ULpacketcoloredInfo. Optionally, the N2 session modification request includes the information #1.

Optionally, the N2 session modification request includes information #2, and the information #2 indicates a processing operation performed by the RAN on a data packet in a process of forwarding data of a specified service (for example, the target service). The information #2 may be carried in the N2 session modification request, may be separately sent by the AMF to the RAN, or may be carried in other signaling sent by the AMF to the RAN. This is not limited. For example, the AMF sends the information #2 to the RAN. After receiving the information #2, the RAN performs some processing operations on the data packet in a forwarding process of the specified data packet. The specified data packet indicates a data packet that carries a measurement identifier.

For example, the RAN receives a downlink data packet of the target service, and the downlink data packet includes a measurement identifier. A processing operation performed by the RAN on the downlink data packet may include: Before forwarding the downlink data packet by using a data radio bearer (data radio bearer, DRB), the RAN colors a downlink PDCP packet based on a measurement identifier in a reserved bit of the GTPU packet header. For example, after the UPF sends a colored downlink data packet (for example, the GTPU packet) to the RAN through the N3 interface, the RAN may directly copy the measurement identifier in the GTPU packet header, and fill the measurement identifier in an extension bit of the PDCP packet header (a PDCP packet header field needs to be extended, and the measurement identifier needs to be filled in a newly added extension field). The RAN may send the colored data packet to the CPE through an air interface DRB. The foregoing operation may be performed after step 607, to be specific, after the UPF fills the measurement identifier in the downlink data packet of the target service.

For another example, the RAN receives an uplink data packet of the target service, and the uplink data packet includes a measurement identifier. A processing operation performed by the RAN on the uplink data packet may include: The RAN colors an uplink GTPU packet based on the measurement identifier in an extension bit of an uplink PDCP header. For example, after the CPE sends a colored uplink data packet (for example, a PDCP packet) to the RAN by using the air interface DRB, the RAN may directly copy the measurement identifier in the uplink PDCP packet header, and fill the measurement identifier in the reserved bit of the uplink GTPU packet header. The RAN may send the colored data packet to the UPF through an N3 interface bearer. The foregoing operation may be performed after step 611, to be specific, after the CPE fills the measurement identifier in the uplink data packet of the target service.

It should be understood that the N2 session modification request may not include the information #2. In other words, the RAN may process the data packet based on an internal function implementation, and the AMF does not need to indicate, by using an explicit information element, the RAN to perform corresponding processing.

611: The RAN sends an RRC reconfiguration message to the CPE.

The RRC reconfiguration (RRC reconfiguration) message includes the ULpacketcoloredInfo. Optionally, if the N2 session modification request in step 610 includes the information #1, the RRC reconfiguration message further includes the information #1.

After receiving the RRC reconfiguration message, the CPE processes the target service based on the measurement information, performs coloring processing on the data packet of the target service, or configures the measurement information.

For example, the CPE determines, based on whether the RRC reconfiguration message carries the information #1, whether to process the target service based on the measurement information. For another example, the CPE determines, based on whether the RRC reconfiguration message carries the ULpacketcoloredInfo, whether to process the target service based on the measurement information. For another example, the CPE determines, based on a value of the information #1 carried in the RRC reconfiguration message, whether to process the target service based on the measurement information. For details, refer to the descriptions in step 607. For brevity, details are not described herein again.

It is assumed that after receiving the RRC reconfiguration message, the CPE determines to process the target service based on the measurement information. In this case, when receiving the uplink data packet of the target service, the CPE may process the uplink data packet of the target service based on the measurement information.

Processing (in other words, coloring processing) performed by the CPE on a data packet (for example, the uplink data packet of the target service) mainly refers to: The CPE adds the measurement identifier to the data packet. For example, when receiving an uplink data packet of a target service that is of an industry application terminal and that is identified by the IP 5-tuple identifier or the DeviceId from the measurement information, the CPE performs QoS marking (for example, adds a QFI marker), further performs coloring processing on the uplink data packet (for example, a PDCP packet), and then sends the colored uplink data packet to the RAN by using the air interface DRB. That the coloring processing is performed on the uplink data packet refers to: The uplink data packet is associated with the measurement identifier, to be specific, the measurement identifier is filled (or referred to as added) in the uplink data packet (for example, the header field). For example, the uplink data packet is a PDCP. As shown in Table 6, an extension field (that is, a field corresponding to 3 Octet) may be newly added, the PDCP packet header field may be extended, and the measurement identifier is filled in the newly added extension field. In this way, when the target service needs to be measured subsequently, it may be determined, based on the measurement identifier of the PDCP packet header, to measure the PDCP packet.

**Table 6**

| Octets | Bits | | | | | | | |
|---|---|---|---|---|---|---|---|---|
| | 8 | 7 | 6 | 5 | 4 | 3 | 2 | 1 |
| 1 | D/C/PDU type marker | R (R indicates a reserved bit) | R | R | PDCP SN/PDCP sequence number marker | | | |
| 2 | PDCP SN | | | | | | | |
| 3 | FlowId | | | | | | | |
| 4 | User plane data (Data) | | | | | | | |
| | ... | | | | | | | |
| N-3 | MAC-I | | | | | | | |
| N-2 | MAC-I | | | | | | | |
| N-1 | MAC-I | | | | | | | |
| N | MAC-I | | | | | | | |

In Table 6, R indicates a reserved bit, and MAC-I indicates an integrity protection key.

612: The CPE sends an RRC reconfiguration complete message to the RAN.

After completing the measurement information configuration of the target service, the CPE may feed back a measurement information configuration result (for example, the measurement information is successfully configured or the measurement information fails to be configured) to the RAN by using the RRC reconfiguration complete (RRC reconfiguration complete) message.

613: The RAN sends an N2 session modification response to the AMF.

After receiving the measurement information configuration result fed back by the CPE, the RAN may forward, to the AMF by using an N2 session modification request response (for example, a PDU session resource modify response), the measurement information configuration result (for example, the measurement information is successfully configured or the measurement information fails to be configured) fed back by the CPE.

614: The AMF sends the session modification response to the SMF.

The AMF forwards, to the SMF, the measurement information configuration result (for example, the measurement information is successfully configured or the measurement information fails to be configured) fed back by the CPE.

The session modification response may be an Nsmf interface PDU session update session management context response (Nsmf_PDUSession_UpdateSMContext response) of the SMF, or may be an Nsmf interface PDU session management context status notification (Nsmf_PDUSession_SMContextStatusNotify) of the SMF. This is not limited.

By using the foregoing steps 607 to 614, each related network element (such as the CPE, the UPF, and the RAN) may complete the measurement information configuration. It may be understood that, if the value of the ColoredType includes only DL, steps 607 and 608 may be performed, and steps 609 to 614 do not need to be performed. If the value of the ColoredType includes only UL, steps 609 to 614 may be performed, and steps 607 and 608 do not need to be performed. If the value of the ColoredType includes UL and DL, steps 607 to 614 may be performed, and there is no strict sequence between steps 607 and 608 and steps 609 to 614.

615: The SMF sends an SM modification response to the NEF.

The SMF feeds back the measurement information configuration result of the target service to the NEF, for example, including a measurement information configuration result (for example, the measurement information is successfully configured or the measurement information fails to be configured) of any one or more of the following network elements: the CPE, the RAN, or the UPF.

In a possible implementation, the SM modification response may be the Nsmf interface PDU session update session management context response (Nsmf_PDUSession_UpdateSMContext response) of the SMF.

Optionally, the SM modification response may include addresses of the following network elements: the CPE, the UPF, and the RAN. These addresses can be used for the WTEMF to send routes of messages related to maintenance and testing job configuration to these network elements subsequently. The foregoing addresses are optional information element parameters. For example, if the SM modification response does not include the foregoing addresses, the WTEMF may select, based on location information (for example, a routing tracking area identifier or a cell identifier) of the CPE, an EMS (or referred to as an EMS corresponding to the UPF) that manages the UPF and an EMS (or referred to as an EMS corresponding to the RAN) that manages the RAN. The EMS that manages the UPF may query for an address of the UPF based on the location information of the CPE, and send a corresponding message related to the maintenance and testing job configuration to the UPF. The EMS that manages the RAN may query for an address of the RAN based on the location information of the CPE, and send a corresponding message related to the maintenance and testing job configuration to the RAN.

616: The NEF sends a measurement information configuration response to the WTEMF.

The measurement information configuration response includes the measurement information configuration result of the target service, for example, including the measurement information configuration result (for example, the measurement information is successfully configured or the measurement information fails to be configured) of any one or more of the following network elements: the CPE, the RAN, or the UPF. Optionally, the measurement information configuration response includes the addresses of the following network elements: the CPE, the UPF, and the RAN.

The foregoing steps 601 to 616 are a process in which after receiving the maintenance and testing request, the WTEMF triggers generation of measurement information of a target service to be maintained and tested and measurement information configuration. With reference to steps 617 to 625, the following describes a process in which the WTEMF triggers, after the measurement information configuration is completed, the network element and the terminal to perform performance measurement job configuration for the target service and measurement result reporting.

After the measurement information configuration for the target service is completed, for example, after the WTEMF receives the measurement information configuration result of the target service, the WTEMF initiates a maintenance and testing job for the target service. For example, the WTEMF allocates a maintenance and testing job identifier, and decomposes the maintenance and testing job. In other words, the WTEMF initiates, to the CPE, the RAN, and the UPF, performance KPI measurement job configuration (or may be referred to as measurement job creation) for the colored data packet of the target service. For that the WTEMF initiates the performance KPI measurement job configuration for the colored data packet of the target service to the CPE, refer to step 617. For that the WTEMF initiates the performance KPI measurement job configuration for the colored data packet of the target service to the RAN and the UPF separately, refer to steps 618 to 621.

617: The CPE configures the maintenance and testing job.

For example, the WTEMF can directly initiate maintenance and testing job configuration for the CPE. A procedure in which the WTEMF performs the maintenance and testing job configuration for the CPE may be implemented based on a procedure of measurement job configuration for the CPE in performance management of the terminal device. For this, refer to the conventional technology. This is not limited in this embodiment of this application.

618: The WTEMF sends a maintenance and testing job configuration request to the EMS.

For example, the WTEMF may configure performance measurement jobs of the RAN and the UPF by using the EMS (for example, denoted as an EMS-RAN) corresponding to the RAN and an EMS (for example, denoted as an EMS-CN) corresponding to the UPF. In a possible implementation, if the measurement information configuration response returned in step 616 includes an address of at least one of the following network elements: the CPE, the UPF, or the RAN, the WTEMF may determine the EMS-RAN based on the address of the RAN, and determine the EMS-CN based on the address of the UPF. In another possible implementation, the WTEMF may determine the EMS-RAN and the EMS-CN based on the location information (for example, the routing tracking area identifier or the cell identifier) of the CPE.

After determining the EMS-RAN and the EMS-CN, the WTEMF may send the maintenance and testing job configuration request to the EMS-RAN and the EMS-CN. For ease of description, only one EMS is shown in FIG. 6A and FIG. 6B, and the EMS is used as an example for description. It may be understood that the EMS may indicate the EMS corresponding to the RAN, or may indicate the EMS corresponding to the UPF.

In a possible implementation, the maintenance and testing job configuration request may be a measurement job creation request (CreateMeasJob request) of a performance management service (performance assurance MnS) of the EMS.

Optionally, the maintenance and testing job configuration request includes one or more of the following information: the measurement indication, the maintenance and testing job identifier (JobId), a service-level KPI, the measurement identifier (used to recognize a measurement object), information #3, measurement time of the target service, a location of the CPE, the UPF address, the RAN address, a target stream (streamTarget), a measurement result reporting manner, a reporting periodicity, or the like.

The measurement indication indicates to measure the performance indicator of the target service associated with the measurement identifier. The measurement indication is an optional information element. For example, the maintenance and testing job configuration request may not include the measurement indication. In this case, the maintenance and testing job configuration request itself has a function of indicating to measure the performance indicator of the target service associated with the measurement identifier.

The measurement time of the target service may include measurement start time and measurement end time.

The information #3, or referred to as a data measurement indication, may indicate a manner of performing data measurement by a network element that performs the data measurement. The data measurement manner includes instant measurement, delay measurement, and the like. In the embodiment shown in the method 600, the information #3 may indicate the instant measurement.

The location of the CPE, the UPF address, and the RAN address are optional information elements. If the UPF address and the RAN address are not carried in step 616, the location information of the CPE may be carried in step 618. If the UPF address or the RAN address is carried in step 616, the UPF address or the RAN address may be carried in step 618, and the location information of the CPE may not need to be carried.

The streamTarget indicates an address used for reporting stream data (streamData). For example, the measurement device learns of, by using the streamTarget included in the maintenance and testing job configuration request, the address used for reporting the streamData, and then may send the measurement result to the WTEMF by using a streamData message, for example, a reportStreamData (reportStreamData) message.

The measurement result reporting manner indicates a manner of reporting the measurement result. For example, the measurement result reporting manner may include reporting based on streaming (streaming) and reporting based on a file (file).

The reporting periodicity indicates a periodicity of reporting the measurement result. For example, the reporting periodicity is one minute. In other words, the measurement result is reported once at an interval of one minute.

The service-level KPI is related to a measurement network element and the eventType. For example, different network elements may measure different KPIs. For example, correspondences between different measurement network elements and KPIs are shown in FIG. 7A and 7B. For another example, different eventTypes correspond to different KPIs. For example, refer to Table 2. Therefore, the KPIs of the target service shown in Table 2 are separately measured by different network elements. Therefore, in a maintenance and testing job configuration process, differentiated configuration may be performed on the KPIs that are of the target service and that are measured by different network elements, as shown in Table 7.

For example, KPIs that can be measured by the UPF include lost uplink GTPU packets, the quantity of downlink N3 long delay packets, the downlink N3 transmission delay, and the downlink packet UPF processing delay. If the eventType is a video surveillance freezing problem, it can be learned from Table 2 that the quantity of lost uplink PDCP packets and the quantity of lost uplink GTPU packets need to be measured. Therefore, only the quantity of lost uplink GTPU packets may be configured for a KPI of the target service configured on the UPF.

**Table 7**

| Measurement network element | Service-level KPI |
|---|---|
| CPE | Downlink packet CPE processing delay |
| RAN | Quantity of lost uplink PDCP packets |
| | Downlink packet RAN network element processing delay |
| | Quantity of downlink air interface long delay packets |
| | Downlink air interface transmission delay |
| UPF | Lost uplink GTPU packets |
| | Quantity of downlink N3 long delay packets |
| | Downlink N3 transmission delay |
| | Downlink packet UPF processing delay |

It may be understood that Table 7 is an example for description, and this embodiment of this application is not limited thereto.

619: The EMS determines the UPF or the RAN based on a location of the CPE.

As described above, only one EMS is used for indication in FIG. 6A and FIG. 6B for brevity. Specifically, if the EMS shown in FIG. 6A and FIG. 6B is the EMS-RAN, in step 619, the EMS-RAN determines the RAN based on the location of the CPE. If the EMS shown in FIG. 6A and FIG. 6B is the EMS-CN, in step 619, the EMS-CN determines the UPF based on the location of the CPE.

For example, if the maintenance and testing job configuration request in step 618 includes the location information of the CPE, and does not include the UPF address and the RAN address, the EMS-RAN may query, based on the location of the CPE, for address information of a RAN that serves the location, and the EMS-CN may query, based on the location of the CPE, for address information of a UPF that serves the location. In a possible implementation, the EMS-RAN may determine the address of the RAN through DNS query or query based on context information that is of a network element device and that is locally stored in the EMS-RAN, and the EMS-CN may determine the address of the UPF through DNS query or determine the address of the UPF through query based on context information that is of a network element device and that is locally stored in the EMS-CN.

It may be understood that if the maintenance and testing job configuration request in step 618 includes the UPF address and the RAN address, step 619 may not be performed.

620: The UPF and the RAN configure the maintenance and testing job.

After determining the RAN based on the location of the CPE, the EMS-RAN may configure the maintenance and testing job with the RAN. After determining the UPF based on the location of the CPE, the EMS-CN may configure the maintenance and testing job with the UPF. Specifically, if the EMS shown in FIG. 6A and FIG. 6B is the EMS-RAN, in step 620, the EMS-RAN configures the maintenance and testing job with the RAN. If the EMS shown in FIG. 6A and FIG. 6B is the EMS-CN, in step 620, the EMS-CN configures the maintenance and testing job with the UPF.

Interaction between the EMS and the network element is not limited in this embodiment of this application. In a possible implementation, for implementation of configuring the maintenance and testing job by the EMS-RAN with the RAN, refer to a manner of configuring the maintenance and testing job between the WTEMF and the EMS-RAN. For implementation of configuring the maintenance and testing job by the EMS-CN with the UPF, refer to a manner of configuring the maintenance and testing job between the WTEMF and the EMS-CN.

For example, the EMS-CN may perform performance measurement job configuration on the UPF by using a CreateMeasJob request operation of the performance assurance MnS. Configured information includes: the maintenance and testing job identifier, the service-level KPI, the measurement identifier, the information #3, the location of the CPE, the RAN address, the streamTarget (a streamData reporting address), the measurement result reporting manner, the reporting periodicity, the measurement start time, the measurement end time, and the like. After completing the maintenance and testing job configuration, the UPF may further feed back a maintenance and testing job configuration result (for example, the maintenance and testing job is successfully configured, or the maintenance and testing job fails to be configured) to the EMS-CN by using a CreateMeasJob response of the performance assurance MnS. If the maintenance and testing job fails to be configured, the CreateMeasJob response may further carry a failure cause. Optionally, the CreateMeasJob response may further carry the maintenance and testing job identifier.

For another example, the EMS-RAN may perform the performance measurement job configuration on the RAN by using the CreateMeasJob request operation of the performance assurance MnS. Specifically, the following information may be configured for the RAN: the maintenance and testing job identifier, the service-level KPI, the measurement identifier, the information #3, the location of the CPE, the UPF address, the streamTarget (the streamData reporting address), the measurement result reporting manner, the reporting periodicity, the measurement start time, the measurement end time, and the like. After completing the maintenance and testing job configuration, the RAN may further feed back a maintenance and testing job configuration result (for example, the maintenance and testing job is successfully configured, or the maintenance and testing job fails to be configured) to the EMS-RAN by using the CreateMeasJob response of the performance assurance MnS. If the maintenance and testing job fails to be configured, the CreateMeasJob response may further carry a failure cause. Optionally, the CreateMeasJob response may further carry the maintenance and testing job identifier.

For the information, refer to the descriptions in step 618. Details are not described herein again.

621: The EMS feeds back a maintenance and testing job configuration result to the WTEMF.

For example, after receiving the maintenance and testing job configuration result fed back by the RAN, the EMS-RAN may forward the maintenance and testing job configuration result to the WTEMF by using the CreateMeasJob response of the performance assurance MnS.

For another example, after receiving the maintenance and testing job configuration result fed back by the UPF, the EMS-CN may forward the maintenance and testing job configuration result to the WTEMF by using the CreateMeasJob response of the performance assurance MnS.

622: The UPF reports the measurement result to the WTEMF.

The UPF may report the measurement result to the WTEMF via the EMS-CN.

If the information #3 in step 620 indicates that the data measurement manner is the instant measurement, the UPF immediately starts to measure a data packet (that is, the data packet of the target service) that carries a measurement identifier, to obtain a measurement result of the data packet that carries the measurement identifier, and reports the measurement result based on the reporting periodicity the measurement result reporting manner. For example, if the measurement result reporting manner in the maintenance and testing job configuration request in step 618 is reporting based on a file, the UPF reports the measurement result in a file-based manner. For another example, if the measurement result reporting manner in the maintenance and testing job configuration request in step 618 is reporting in a streaming-based manner, the UPF reports the measurement result by using reportStreamData. It may be understood that, in this embodiment of this application, the measurement result is measurement data of a service (that is, the target service).

Optionally, the measurement result includes information such as the maintenance and testing job identifier, start time of data measurement statistics collection, end time of the data measurement statistics collection, and a data measurement result.

623: The RAN reports the measurement result to the WTEMF.

The RAN reports the measurement result to the WTEMF via the EMS-RAN.

Step 623 is similar to step 622, and details are not described herein again.

624: The CPE reports the measurement result to the WTEMF.

Step 624 is similar to step 622, and details are not described herein again.

625: The WTEMF performs fault locating analytics based on the measurement result.

The WTEMF can associate data of a same maintenance and testing job based on the maintenance and testing job identifier. In this way, the WTEMF can perform joint diagnostic analytics based on data reported by the CPE, the RAN, and the UPF. For example, the WTEMF may select, based on the start time and end time of the data measurement statistics collection, data that is reported by the CPE, the RAN, and the UPF and that is collected in a same time interval (that is, data time synchronization may be completed), and perform joint diagnostic analytics based on the data that is reported by the CPE, the RAN, and the UPF and that is obtained through the time synchronization. In a possible manner, demarcation analytics may be first performed on a network fault, and then the fault locating analytics may be performed. For example, if a demarcation analytics result is that the CPE is faulty, CPE fault locating analytics may be performed based on performance data such as device status data of the CPE. If the demarcation analytics result is that the CPE is not faulty, the EMS-CN may be triggered to perform UPF fault locating analytics, and the EMS-RAN may be triggered to perform RAN fault locating analytics. The WTEMF may perform maintenance and testing demarcation and locating analytics according to an artificial intelligence (artificial intelligence, AI) machine learning algorithm or a conventional policy rule. This is not limited in this embodiment of this application.

The scenario shown in FIG. 2 is used as an example. It is assumed that, in a time period or at a moment, a backhaul video freezing problem of a camera 1 occurs, and other services on the CPE are normal, and it is assumed that a cause of the service problem of the camera 1 is an uplink packet loss or a disorder of a video backhaul service flow of a flow 1. As described above, if device-level fault diagnostic analytics is performed, an average quantity of lost packets or an average packet loss rate of data packets of all service flows (for example, including the flow 1, a flow 2, and a flow 3) on the CPE is collected, and the average quantity of lost packets or the average packet loss rate is used as a real quantity of lost packets or a real packet loss rate of data packets of each service flow. Therefore, a final diagnostic analytics result may be that the CPE is not abnormal, and consequently, the fault diagnostic analytics result is inaccurate. According to this embodiment of this application, measurement data based on which the WTEMF performs fault locating analytics is measurement data of a service (that is, the target service) at a fine granularity, instead of measurement data of all services. Therefore, accuracy of the fault diagnostic analytics can be improved. The CPE is used as an example. The measurement data based on which the WTEMF performs fault locating analytics is measurement data of the target service on the CPE, instead of an average value of measurement data of all services on the CPE. Therefore, the accuracy of fault diagnostic analytics can be improved.

For example, in step 601, the application server detects video freezing of the camera 1. In step 602, the application server sends the maintenance and testing request to the WTEMF, and includes an Id of the camera 1 in the maintenance and testing request. The WTEMF configures measurement information for a service (in other words, the flow 1) of the camera 1, and sends the measurement information to the CPE, the UPF, and the RAN. The CPE, the UPF, and the RAN perform coloring processing (for example, adding a measurement identifier to a data packet of the flow 1) on the data packet of the flow 1 based on the measurement information. Further, if the CPE, the UPF, and the RAN receive the maintenance and testing job of the WTEMF, the CPE, the UPF, and the RAN may measure a data packet (for example, a data packet that carries the measurement identifier) obtained through the coloring processing, to be specific, measure a colored data packet of the flow 1, and report measurement data to the WTEMF. Then, the WTEMF performs fault analytics based on the reported measurement data. For example, the WTEMF may perform joint diagnostic analytics based on the measurement data of the colored data packet of the flow 1 reported by the CPE, the UPF, and the RAN, to further learn that the cause of the service problem of the camera 1 is the uplink packet loss or the disorder of the video backhaul service flow of the flow 1. For another example, the WTEMF first performs demarcation analytics on the network fault, a demarcation analytics result is that the CPE is faulty, and then the WTEMF directly performs diagnostic analytics based on the measurement data of the colored data packet of the flow 1 reported by the CPE, to further learn that the cause of the service problem of the camera 1 is the uplink packet loss or disorder of the video backhaul service flow of the flow 1. For another example, the WTEMF first performs demarcation analytics on the network fault, a demarcation analytics result is that the CPE is faulty, and then the WTEMF initiates, to the CPE, measurement job configuration for the colored data packet of the flow 1. Further, the diagnostic analytics is performed based on the measurement data of the colored data packet of the flow 1 reported by the CPE, to learn that the cause of the service problem of the camera 1 is the uplink packet loss or the disorder of the video backhaul service flow of the flow 1. It may be understood that these are simple examples for description herein. For details, refer to the descriptions of each step in the method 600.

With reference to steps 601 to 625 shown in FIG. 6A and FIG. 6B, the foregoing describes an example of a scenario in which after receiving the maintenance and testing request, the WTEMF triggers generation of measurement information of a service to be maintained and tested and measurement information configuration, and after completing the measurement information configuration, the WTEMF triggers a network element and a terminal to perform performance measurement job configuration for the service to be maintained and tested and measurement result reporting. Based on the foregoing embodiment, a WTEMF function is enhanced to support a maintenance and testing function at a service granularity, for example, including determining a maintenance and testing performance KPI, allocating the measurement identifier, configuring the measurement information, performing fault diagnostic analytics, and the like. A session modification procedure is extended and enhanced to support service-level measurement information configuration, and the UPF, the RAN, and the CPE are enhanced to support a function of performing coloring processing on a data packet. In addition, when collecting the measurement data, the UPF, the RAN, and the CPE only need to measure a colored data packet (for example, a data packet that carries a measurement identifier). In this way, network performance data collection for a specific service may be implemented, and fast fault demarcation and location based on device-network synergy may be implemented.

FIG. 7A and FIG. 7B are a schematic flowchart of a measurement method according to another embodiment of this application. The method 700 shown in FIG. 7A and FIG. 7B may be applied to the second possible situation of the foregoing method 500. The method 700 shown in FIG. 7A and FIG. 7B may include the following steps.

701: After detecting, through monitoring, that a terminal device goes online, a WTEMF configures measurement information.

After detecting, through monitoring, that a terminal device (such as a camera and a PLC) that connects to CPE is deployed and goes online, the WTEMF obtains a service identifier of the terminal device from the CPE, and configures the measurement information for a service of the terminal device. For differentiation, a service for which the measurement information is configured is denoted as a target service.

For example, the WTEMF may determine, based on a type of the terminal device, a performance KPI of a target service that needs to be measured and a type of a data packet that needs to be colored. In addition, the WETMF may allocate a measurement identifier FlowId to the target service, and generate measurement information of the target service (refer to Table 3).

Steps 702 to 714 are similar to steps 604 to 616, and details are not described herein again.

After measurement information configuration for the target service is completed, for example, after the WTEMF receives a measurement information configuration result of the target service, the WTEMF initiates maintenance and testing job configuration for the target service. For example, the WTEMF allocates a maintenance and testing job identifier, and decomposes a maintenance and testing job. In other words, the WTEMF separately initiates, to the CPE, a RAN, and a UPF, performance KPI measurement job configuration for a colored data packet of the target service.

715: The CPE configures the maintenance and testing job.

For example, the WTEMF can directly initiate maintenance and testing job configuration for the CPE. A procedure in which the WTEMF performs the maintenance and testing job configuration for the CPE may be implemented based on a procedure of measurement job configuration for the CPE in performance management of the terminal device. For this, refer to a conventional technology. This is not limited in this embodiment of this application.

716: The WTEMF sends a maintenance and testing job configuration request to an EMS.

Step 716 is similar to step 618, and a difference lies in that in the embodiment shown in the method 700, the information #3 may indicate to delay measurement.

Steps 717 to 719 are similar to steps 619 to 621, and details are not described herein again.

After the foregoing steps 701 to 719, a measurement device (that is, the CPE, the RAN, and the UPF) may first complete the measurement information configuration and the maintenance and testing job configuration, and may not start data measurement temporarily. In this way, impact of processing delays of measurement information configuration and maintenance and testing job configuration on data collection can be reduced, so that collected data is network status performance data when a network fault occurs, thereby improving accuracy of fault diagnostic analytics.

720: An application server detects that the target service is faulty.

If the application server detects that a service is faulty, the application server may initiate a maintenance and testing request for the corresponding service to the WTEMF, to trigger the WTEMF to perform measurement on performance of a specified service, and analyze and diagnose the network fault based on performance data of the service.

Step 720 is similar to step 601, and details are not described herein again.

721: The application server sends a maintenance and testing request to the WTEMF.

Optionally, the maintenance and testing request includes one or more of the following information: a DeviceId, an abnormal event, or a target service identifier.

Step 721 is similar to step 602, and details are not described herein again.

722: The WTEMF sends a maintenance and testing job activation request to a NEF.

The maintenance and testing job activation request includes the maintenance and testing job identifier and a CPE Id. Optionally, the maintenance and testing job activation request includes a measurement indication, and the measurement indication indicates to measure a performance indicator of a target service associated with the measurement identifier. The measurement indication is an optional information element. For example, the maintenance and testing job activation request may not include the measurement indication. In this case, the maintenance and testing job activation request itself has a function of indicating to measure the performance indicator of the target service associated with the measurement identifier.

The WTEMF may trigger, by invoking a control plane service interface of the NEF, a core network to start a control plane signaling procedure, to activate a maintenance and testing job configured on each related network element in a network, to be specific, trigger each related network element to start to collect related KPI measurement statistics on the colored data packet of the target service.

In a possible implementation, the maintenance and testing job activation request may be an Nnef_ApplyPolicy _Create request. In this embodiment of this application, an input parameter of the Nnef_ApplyPolicy_Create request may be enhanced to include the maintenance and testing job identifier and the CPE Id. The foregoing is an example for description, and this embodiment of this application is not limited thereto. For example, a new NEF service interface may be defined to implement maintenance and testing job activation.

723: The NEF sends the maintenance and testing job activation request to an SMF.

After receiving the maintenance and testing job activation request delivered by the WTEMF, the NEF invokes an Nsmf_PDUSession service of the SMF to initiate a PDU session modification signaling procedure to the SMF. In other words, the NEF sends the maintenance and testing job activation request to the SMF by using an Nsmf_PDUSession_UpdateSMContext request or Nsmf_PDUSession_StatusNotify. For example, in this embodiment of this application, an input parameter of the Nsmf_PDUSession_UpdateSMContext request may be enhanced to include the maintenance and testing job identifier and the CPE Id.

724: The SMF sends the maintenance and testing job activation request to the UPF.

For example, the SMF receives the maintenance and testing job activation request from the NEF, and the SMF may activate, by using an N4 session modification request of an N4 interface, the UPF to start to execute the maintenance and testing job. For example, in this embodiment of this application, an input parameter of the N4 session modification request may be enhanced to include the maintenance and testing job identifier and the CPE Id.

725: The SMF sends the maintenance and testing job activation request to an AMF.

For example, the SMF receives the maintenance and testing job activation request from the NEF, and the SMF may send the maintenance and testing job activation request to the AMF by invoking a Namf_Communication_N1N2MessageTransfer service of the AMF. Information element parameters of a message include the maintenance and testing job identifier and the CPE Id.

726: The AMF sends the maintenance and testing job activation request to the RAN and the CPE.

The AMF separately sends the maintenance and testing job activation request to the RAN and the CPE based on N2 interface signaling (such as trace start) and an air interface RRC message (such as an RRC reconfiguration message). Information element parameters of the message include the maintenance and testing job identifier and the CPE Id.

727: Perform measurement result reporting and fault diagnostic analytics.

After receiving the maintenance and testing job activation request, the CPE, the UPF, and the RAN immediately start to collect measurement statistics on a related performance KPI of the target service and report a measurement statistics result to the WTEMF. The WTEMF performs fault diagnostic analytics. For related descriptions of processes of measurement statistics result reporting and diagnostic analytics, refer to steps 622 to 625. Details are not described herein again.

With reference to steps 701 to 727 shown in FIG. 7A and FIG. 7B, the foregoing describes an example of a scenario in which after the terminal device goes online, the measurement information configuration and the maintenance and testing job configuration are completed, and after receiving the abnormal event reported by the application server, the WTEMF activates the maintenance and testing job. Based on the foregoing embodiment, after the terminal device goes online, the measurement information configuration and the maintenance and testing job configuration are completed, and the data measurement may not be started temporarily. After receiving the abnormal event reported by the application server, the WTEMF quickly activates the maintenance and testing job through a signaling plane. In this way, the impact of the processing delays of the measurement information configuration and the maintenance and testing job configuration on the data collection can be reduced, so that the collected data is the network status performance data in a case in which the network fault occurs, to improve the accuracy of the fault diagnostic analytics.

FIG. 8A and FIG. 8B are a schematic flowchart of a measurement method according to another embodiment of this application. The method 800 shown in FIG. 8A and FIG. 8B may be applied to the third possible situation of the method 500. The method 800 shown in FIG. 8A and FIG. 8B may include the following steps.

801: An application server detects, through monitoring, that a service starts.

When the application server starts to send and receive service data, the application server may trigger performance KPI monitoring on a specified service (for example, denoted as a target service), for example, the application server sends a monitoring request to a WTEMF.

802: The application server sends the monitoring request to the WTEMF.

Optionally, the monitoring request includes a target service identifier, a DeviceId, information #4, and a target service type. The information #4 may also be referred to as, for example, a KPI monitoring indication (KPI monitoring indication), and indicate that KPI monitoring of a service needs to be performed. For example, the target service type may include video surveillance, a control instruction, and the like.

In a possible implementation, the application server sends the monitoring request to the WTEMF by invoking an interface service of the WTEMF.

803: The WTEMF configures measurement information.

For example, the WTEMF may determine, based on the target service type, a performance KPI type (for example, refer to Table 2) of a service that needs to be measured and a type of a data packet on which coloring needs to be performed. In addition, the WTEMF may allocate a measurement identifier FlowId to the target service, and configure measurement information ColoredPolicy (for example, refer to Table 3) of the target service.

Steps 804 to 816 are similar to steps 604 to 616, and details are not described herein again.

After measurement information configuration for the target service is completed, for example, after the WTEMF receives a measurement information configuration result of the target service, the WTEMF initiates a maintenance and testing job for the target service. For example, the WTEMF allocates a maintenance and testing job identifier, and decomposes the maintenance and testing job. In other words, the WTEMF initiates, to CPE, a RAN, and a UPF, performance KPI measurement job configuration for a colored data packet of the target service.

817: The CPE configures the maintenance and testing job.

For example, the WTEMF can directly initiate maintenance and testing job configuration for the CPE. A procedure in which the WTEMF performs the maintenance and testing job configuration for the CPE may be implemented based on a procedure of measurement job configuration for the CPE in performance management of the terminal device. Optionally, in a configuration process, a measurement result cache indication and measurement result cache time may be further added to configuration information. The measurement result cache indication indicates to locally cache performance data obtained through measurement statistics collection. The measurement result cache time indicates time information (for example, a time length) for locally caching the performance data obtained through the measurement statistics collection.

818: The WTEMF sends a maintenance and testing job configuration request to an EMS.

Step 818 is similar to step 618, and a difference lies in that, in the embodiment shown in the method 800, the maintenance and testing job configuration request further includes the measurement result cache indication and the measurement result cache time. The measurement result cache indication indicates to locally cache the performance data obtained through the measurement statistics collection, and the measurement result cache time indicates the time information (for example, the time length) for locally caching the performance data obtained through the measurement statistics collection.

For the measurement result cache time, cache time of a measurement result of each network element may be the same or may be different. This is not limited. For example, measurement result cache time sent by the WTEMF to the CPE is T1, measurement result cache time sent by the WTEMF to an EMS-CN (that is, an EMS corresponding to the UPF) is also T1, and measurement result cache time sent by the WTEMF to an EMS-RAN (that is, an EMS corresponding to the RAN) is also T1.

819: The EMS determines the UPF or the RAN based on a location of the CPE.

Step 819 is similar to step 619, and details are not described herein again.

820: The UPF and the RAN configure the maintenance and testing job.

Step 820 is similar to step 620, and a difference lies in that, in the embodiment shown in the method 800, the maintenance and testing job configuration request further includes the measurement result cache indication and the measurement result cache time.

The CPE, the RAN, and the UPF each collect measurement statistics on a related performance KPI of the target service based on the maintenance and testing job configuration, and locally cache a measurement result based on measurement result cache time. If the measurement result cache time expires, and reporting of the measurement result is not requested (that is, a measurement result reporting request is not received), the cached measurement result may be deleted to save storage space.

821: The EMS feeds back a maintenance and testing job configuration result to the WTEMF.

Step 821 is similar to step 621, and details are not described herein again.

After the foregoing steps 801 to 821, a measurement device (that is, the CPE, the RAN, and the UPF) may first complete the measurement information configuration and the maintenance and testing job configuration, and start data measurement. In this way, it can be ensured as much as possible that collected performance data is related data when an abnormal event occurs, to improve accuracy of fault diagnostic analytics.

822: The application server detects that the target service is faulty.

If the application server detects that the target service is faulty, the application server may initiate a maintenance and testing request for the target service to the WTEMF, to trigger the WTEMF to perform measurement on performance of the specified target service, and analyze and diagnose a network fault based on performance data of the target service.

823: The application server sends the maintenance and testing request to the WTEMF.

Optionally, the maintenance and testing request includes one or more of the following information: the DeviceId, the abnormal event, the target service identifier, or time (ProblemTime) when the abnormal event occurs.

Step 823 is similar to step 602, and details are not described herein again.

824: The WTEMF sends a measurement result reporting indication to a NEF.

The measurement result reporting indication may also be referred to as, for example, a data reporting request, and indicates to report a measurement result.

It may be understood that, the measurement result reporting indication in the method 800 may indicate a measurement result obtained before reporting (in other words, measurement is already performed before and the measurement result is cached). In this way, it can be ensured as much as possible that the collected performance data is the related data in the case in which the abnormal event occurs, to improve the accuracy of the fault diagnostic analytics. Different from that in the method 800, the maintenance and testing job activation request in the method 700 may indicate to start the measurement. In this way, unnecessary measurement can be avoided. For example, the service is measured when the service is not faulty. For example, in actual communication, different solutions may be selected based on different scenarios or actual requirements. For example, for a service that is prone to a fault, a solution of the method 800 may be used. For another example, for a service that is not prone to a fault, a solution of the method 600 or the method 700 may be used.

Optionally, the measurement result reporting indication includes: the maintenance and testing job identifier, a CPE Id, the target service identifier, a KPI, and data time (dataTime).

For the KPI, refer to Table 7 to request different network elements to report different KPIs. The data time indicates a collection time period corresponding to the reported measurement data. It may be understood that the collection time period corresponding to the reported measurement data needs to include the ProblemTime. For example, the data time is T2, and may represent requesting to report data measured within T2 minutes before and after a ProblemTime moment, where T2 is a number greater than 0.

The WTEMF may trigger, by invoking a control plane service interface of the NEF, a core network to start a control plane signaling procedure, to trigger each related network element to report a cached measurement statistics result of a KPI related to the target service.

In a possible implementation, the measurement result reporting indication may be an Nnef_ApplyPolicy_Create request. In this embodiment of this application, the Nnef_ApplyPolicy _Create request may be enhanced to include the maintenance and testing job identifier, the CPE Id, the target service identifier, the KPI, and the data time. The foregoing is an example for description, and this embodiment of this application is not limited thereto. For example, a new NEF service interface may alternatively be defined.

825: The NEF forwards the measurement result reporting indication to an SMF.

After receiving the measurement result reporting indication delivered by the WTEMF, the NEF invokes an Nsmf_PDUSession service service of the SMF to initiate a PDU session modification signaling procedure to the SMF. In other words, the NEF sends the measurement result reporting indication to the SMF by using the Nsmf_PDUSession_UpdateSMContext request or Nsmf_PDUSession_StatusNotify. An input parameter of the Nsmf_PDUSession_UpdateSMContext request is enhanced to include the maintenance and testing job identifier, the CPE Id, the target service identifier, the KPI, and the data time.

826: The SMF forwards the measurement result reporting indication to the UPF.

After receiving the measurement result reporting indication from the NEF, the SMF may trigger, by using an N4 session modification request of an N4 interface, the UPF to start to report maintenance and testing data. In this embodiment of this application, an input parameter of the N4 session modification request may be enhanced to include the maintenance and testing job identifier, the CPE Id, the target service identifier, the KPI, and the data time.

827: The SMF forwards the measurement result reporting indication to an AMF.

The SMF invokes a Namf_Communication_N1N2MessageTransfer service of the AMF to send a maintenance and testing measurement result reporting indication to the AMF.

828: The AMF forwards the measurement result reporting indication to the RAN and the CPE.

The AMF separately sends the measurement result reporting indication to the RAN and the CPE based on N2 interface signaling (such as trace start) and an air interface RRC message (such as an RRC reconfiguration message).

829: Perform measurement result reporting and fault diagnostic analytics.

After receiving the measurement result reporting indication, the CPE, the UPF, and the RAN each report a measurement result to the WTEMF. For example, the CPE, the UPF, and the RAN recognize the measurement job based on the maintenance and testing job identifier in the measurement result reporting indication, recognize the target service based on the target service identifier, and report, based on the data time, measurement data collected in a corresponding time period. After receiving the reported measurement result, the WTEMF performs fault maintenance and testing diagnostic analytics. For related descriptions of processes of measurement statistics result reporting and diagnostic analytics, refer to steps 622 to 625. Details are not described herein again.

With reference to steps 801 to 829 shown in FIG. 8A and FIG. 8B, the foregoing describes, by using an example, a scenario in which data collection is performed when the service starts, and when a monitored abnormal event occurs, data in a period of time before and after an occurrence moment of the abnormal event is reported. Based on the foregoing embodiment, when the service starts, the data is collected, and is not reported to the WTEMF temporarily, but is cached locally for a period of time. When it is detected, through monitoring, that the abnormal event occurs, reporting of the measurement data in the period of time before and after the occurrence time of the abnormal event is requested, to perform maintenance and testing fault diagnostic analytics. In this manner, it can be ensured that the collected performance data is the related data in the case in which the abnormal event occurs, to improve the accuracy of the fault diagnostic analytics.

It may be understood that the examples in FIG. 6A and FIG. 6B to FIG. 8A and FIG. 8B in embodiments of this application are merely intended to help a person skilled in the art understand embodiments of this application, and are not intended to limit embodiments of this application to the specific scenarios shown in the examples. A person skilled in the art can definitely make various equivalent modifications or changes based on the examples shown in FIG. 6A and FIG. 6B to FIG. 8A and FIG. 8B, and such modifications or changes also fall within the scope of embodiments of this application. For example, the target service in FIG. 6A and FIG. 6B to FIG. 8A and FIG. 8B may be replaced with one or more services.

It may be further understood that the steps in FIG. 6A and FIG. 6B to FIG. 8A and FIG. 8B are merely examples for description, and are not strictly limited. For example, FIG. 6A and FIG. 6B are used as an example. If coloring processing is performed only on a downlink data packet, steps 609 to 614 may not be performed. If the coloring processing is performed only on an uplink data packet, steps 607 and 608 may not be performed. For another example, FIG. 6A and FIG. 6B are used as an example. If the WTEMF initiates, to the CPE, only the performance KPI measurement job configuration for the colored data packet of the target service, steps 618 to 621 and steps 622 and 623 may not be performed. If the WTEMF initiates, to the RAN and the UPF, only the performance KPI measurement job configuration for the colored data packet of the target service, step 617 and step 624 may not be performed. In addition, sequence numbers of the foregoing processes do not mean a sequence of execution. The sequence of execution of the processes should be determined according to functions and internal logic of the processes, and should not constitute any limitation on an implementation process of embodiments of this application.

It may be further understood that, in some scenarios, some optional features in embodiments of this application may be independently implemented without depending on another feature, or may be combined with another feature in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that, values of various numerical sequence numbers in embodiments of this application do not mean execution sequences, are merely distinguished for ease of description, and should not be construed as any limitation on the implementation processes of embodiments of this application.

It may be further understood that, in embodiments of this application, some message names, such as the session modification request, the monitoring request, and the maintenance and testing request, are involved. It should be understood that the message names do not limit the protection scope of embodiments of this application.

It may be further understood that, in some of the foregoing embodiments, the coloring processing is repeatedly mentioned, and it indicates that the coloring processing is performed on the data packet, or in other words, the data packet is associated with the measurement identifier.

It may be further understood that, in some of the foregoing embodiments, the measurement result and the measurement data are used alternately sometimes, and both indicate measured data.

It may be further understood that, in the foregoing method embodiments, the method and the operation implemented by the terminal device may alternatively be implemented by a component (for example, a chip or a circuit) of the terminal device. In addition, the method and the operation implemented by the network device may alternatively be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

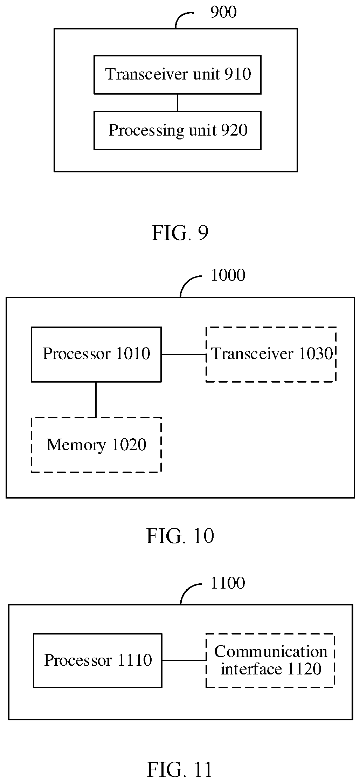

FIG. 9 is a block diagram of a measurement apparatus according to an embodiment of this application. The apparatus 900 includes a transceiver unit 910 and a processing unit 920. The transceiver unit 910 may implement a corresponding communication function, and the transceiver unit 910 may further be a communication interface or a communication unit. The processing unit 920 may implement a corresponding processing function, for example, processing instructions and/or data.

In a possible implementation, the apparatus 900 may further include a storage unit. The storage unit may be configured to store the instructions and/or the data. The processing unit 920 may read the instructions and/or the data in the storage unit, to enable the apparatus to implement the foregoing method embodiments.

The apparatus 900 may be configured to perform an action performed by the communication device (for example, a management device or a measurement device) in the foregoing method embodiments. In this case, the apparatus 900 may be a communication device or a component that can be configured in the communication device. The transceiver unit 910 is configured to perform sending/receiving-related operations on a communication device side in the foregoing method embodiments, and the processing unit 920 is configured to perform processing-related operations on the communication device side in the foregoing method embodiments.

In a design, the apparatus 900 is configured to perform an action performed by the management device (for example, a WTEMF) in the foregoing method embodiments.

In a possible implementation, the transceiver unit 910 is configured to send a measurement identifier to the measurement device. The measurement identifier is used to be associated with a to-be-measured target service, and the target service is a service corresponding to a data flow that passes through an industry terminal. The transceiver unit 910 is further configured to send a measurement indication to the measurement device. The measurement indication indicates to measure a performance indicator of the target service associated with the measurement identifier, and the performance indicator of the target service is associated with an abnormal event of the target service. Optionally, the processing unit 920 is configured to configure the measurement identifier for the target service.

For example, the transceiver unit 910 is further configured to send one or more of the following information to the measurement device: a data packet type of the target service associated with the measurement identifier, an identifier of the target service, a customer-premises equipment identifier corresponding to the target service, or an identifier of the terminal device.

For another example, the transceiver unit 910 is specifically configured to: after receiving a maintenance and testing request for performing maintenance and testing on the target service, send the measurement identifier to the measurement device; after receiving a monitoring request for monitoring the performance indicator of the target service, send the measurement identifier to the measurement device; or after detecting, through monitoring, that the terminal device goes online, send the measurement identifier to the measurement device.

For another example, the transceiver unit 910 is further configured to receive address information of the measurement device.

For another example, the transceiver unit 910 is specifically configured to: after receiving the maintenance and testing request for performing maintenance and testing on the target service, send the measurement indication to the measurement device; or after receiving the monitoring request for monitoring the performance indicator of the target service, send the measurement indication to the measurement device.

For another example, the transceiver unit 910 is further configured to send a measurement result cache indication of the target service and/or measurement result cache time of the target service to the measurement device.

For another example, the transceiver unit 910 is further configured to send a measurement result reporting indication to the measurement device. The measurement result reporting indication indicates to report a measurement result of the target service in a target time period.

For another example, the transceiver unit 910 is further configured to send one or more of the following information to the measurement device: the performance indicator of the target service, a maintenance and testing job identifier, the measurement identifier, measurement time of the target service, a measurement manner of the measurement device, or an address of the measurement device.

For another example, the maintenance and testing request includes one or more of the following information: the abnormal event of the target service, the identifier of the terminal device, or the identifier of the target service.

The apparatus 900 may implement corresponding steps or procedures performed by the management device (for example, the WTEMF) in the method embodiments according to embodiments of this application. The apparatus 900 may include units configured to perform the methods performed by the management devices in FIG. 5 to FIG. 8A and FIG. 8B. In addition, the units in the apparatus 900 and the foregoing other operations and/or functions are respectively intended to implement corresponding procedures of the method embodiments of the management devices in FIG. 5 to FIG. 8A and FIG. 8B.

It should be understood that a specific process in which the units perform the foregoing corresponding steps is described in detail in the foregoing method embodiments. For brevity, details are not described herein again.

In another design, the apparatus 900 is configured to perform an action performed by the measurement device (for example, CPE, a UPF, or a RAN) in the foregoing method embodiments.

In a possible implementation, the transceiver unit 910 is configured to receive the measurement identifier from the management device. The measurement identifier is used to be associated with the to-be-measured target service, and the target service is the service corresponding to the data flow that passes through the industry terminal. The processing unit 920 is configured to associate the measurement identifier with the target service. The processing unit 920 is further configured to measure the performance indicator of the target service associated with the measurement identifier, and the performance indicator of the target service is associated with the abnormal event of the target service.

For example, the transceiver unit 910 is further configured to receive one or more of the following information from the management device: the data packet type of the target service associated with the measurement identifier, the identifier of the target service, the customer-premises equipment identifier corresponding to the target service, or the identifier of the terminal device.

For another example, the processing unit 920 is specifically configured to add a measurement identifier to a data packet of the target service.

For another example, the transceiver unit 910 is further configured to send the address information of the measurement device.

For another example, the transceiver unit 910 is further configured to receive the measurement indication from the management device. The measurement indication indicates to measure the performance indicator of the target service associated with the measurement identifier. The processing unit 920 is specifically configured to: in response to the measurement indication, measure the performance indicator of the target service associated with the measurement identifier.

For another example, the transceiver unit 910 is further configured to receive the measurement result cache indication of the target service and/or the measurement result cache time of the target service from the management device. The processing unit 920 is further configured to cache the measurement result of the target service based on the measurement result cache indication of the target service and/or the measurement result cache time of the target service.

For another example, the transceiver unit 910 is further configured to: in a preset time period, if the measurement result reporting indication from the management device is received, report the measurement result in the target time period to the management device. The measurement result reporting indication indicates to report the measurement result of the target service in the target time period. Alternatively, in a preset time period, if the measurement result reporting indication from the management device is not received, the processing unit 920 is configured to delete a cached measurement result of the target service in the target time period.

For another example, the transceiver unit 910 is further configured to receive one or more of the following information from the management device: the performance indicator of the target service, the maintenance and testing job identifier, the measurement identifier, the measurement time of the target service, the measurement manner of the measurement device, or the address of the measurement device.

The apparatus 900 may implement corresponding steps or procedures performed by the measurement device (for example, the CPE, the UPF, or the RAN) in the method embodiments according to embodiments of this application. The apparatus 900 may include units configured to perform the methods performed by the measurement devices in FIG. 5 to FIG. 8A and FIG. 8B. In addition, the units in the apparatus 900 and the foregoing other operations and/or functions are respectively intended to implement corresponding procedures of the method embodiments of the measurement devices in FIG. 5 to FIG. 8A and FIG. 8B.

It should be understood that a specific process in which the units perform the foregoing corresponding steps is described in detail in the foregoing method embodiments. For brevity, details are not described herein again.

It should be further understood that the apparatus 900 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the communication device (for example, the management device or the measurement device) in the foregoing embodiments, and may be configured to perform procedures and/or steps corresponding to the communication device (for example, the management device or the measurement device) in the foregoing method embodiments. To avoid repetition, details are not described herein again.

In addition, the processing unit 920 in the foregoing embodiments may be implemented by using at least one processor or a processor-related circuit. The transceiver unit 910 may be implemented by using a transceiver or a transceiver-related circuit. The storage unit may be implemented by using at least one memory.

It should be noted that the apparatus in FIG. 9 may be a network element or device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 shows a measurement apparatus according to an embodiment of this application. The apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the methods in the foregoing method embodiments are performed.

In a possible implementation, the apparatus 1000 includes one or more processors 1010.

Optionally, as shown in FIG. 10, the apparatus 1000 further includes the memory 1020.

In a possible implementation, the apparatus 1000 may include one or more memories 1020.

In a possible implementation, the memory 1020 may be integrated with the processor 1010, or the memory 1020 and the processor 1010 are separately disposed.

Optionally, as shown in FIG. 10, the apparatus 1000 further includes a transceiver 1030. The transceiver 1030 may be configured to receive and/or send a signal. For example, the processor 1010 is configured to control the transceiver 1030 to receive and/or send the signal.

In a solution, the apparatus 1000 is configured to implement operations performed by the communication device (for example, a management device or a measurement device) in the foregoing method embodiments.

For example, the processor 1010 is configured to implement processing-related operations performed by the management device (for example, a WTEMF) in the foregoing method embodiments, and the transceiver 1030 is configured to implement receiving/sending-related operations performed by the management device (for example, the WTEMF) in the foregoing method embodiments.

For another example, the processor 1010 is configured to implement processing-related operations performed by the measurement device (for example, CPE, a UPF, or a RAN) in the foregoing method embodiments, and the transceiver 1030 is configured to implement receiving/sending-related operations performed by the measurement device (for example, the CPE, the UPF, or the RAN) in the foregoing method embodiments.

FIG. 11 is a diagram of a chip according to an embodiment of this application. The chip 1100 (or may be referred to as a processing system, or may be referred to as a chip system) includes a processor 1110. The processor may be a processor, a microprocessor, or an integrated circuit integrated on the chip. Optionally, the chip 1100 may further include a communication interface 1120. The communication interface 1120 may alternatively be an input/output circuit, or an input/output interface (input/output interface). When the chip 1100 is a chip system or a processing system, a device in which the chip 1100 is installed may be enabled to implement the method and function in embodiments of this application. For example, the processor 1110 may be a processing circuit in the chip system or the processing system, to control a device in which the chip system or the processing system is installed, and may be coupled to a storage unit to invoke instructions in the storage unit, so that the device can implement the method and function in embodiments of this application. The communication interface 1120 may be an input/output circuit in the chip system or the processing system, and outputs information processed by the chip system, or inputs to-be-processed data or signaling information into the chip system for processing.

In a solution, the apparatus 1100 is configured to implement the operations performed by the communication device (for example, the management device or the measurement device) in the foregoing method embodiments.

For example, the processor 1110 is configured to implement processing-related operations performed by the management device (for example, a WTEMF) in the foregoing method embodiments, and the communication interface 1120 is configured to implement receiving/sending-related operations performed by the management device (for example, the WTEMF) in the foregoing method embodiments.

For another example, the processor 1110 is configured to implement processing-related operations performed by the measurement device (for example, CPE, a UPF, or a RAN) in the foregoing method embodiments, and the communication interface 1120 is configured to implement receiving/sending-related operations performed by the measurement device (for example, the CPE, the UPF, or the RAN) in the foregoing method embodiments.

An embodiment of this application further provides a computer-readable storage medium. The computer-readable storage medium stores computer instructions used to implement the method performed by the communication device (for example, the management device, or the measurement device) in the foregoing method embodiments.

An embodiment of this application further provides a computer program product including instructions. When the instructions are executed by a computer, the computer is enabled to implement the method performed by the communication device (for example, the management device, or the measurement device) in the foregoing method embodiments.

An embodiment of this application further provides a communication system. The communication system includes one or more of the management device, the measurement device, a network element management device (for example, an EMS), and an application server in the foregoing embodiments.

For example, the communication system includes the management device (for example, the WTEMF) and the measurement device in the foregoing embodiments.

For explanations and beneficial effects of related content of any one of the apparatuses provided above, refer to the corresponding method embodiments provided above. Details are not described herein again.

It should be understood that, the processor mentioned in embodiments of this application may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not of limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other suitable type of memory.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. A part or all of the units may be selected based on actual requirements to implement the solutions provided in this application.

In addition, the functional units in embodiments of this application may be integrated into one unit, or each of the units may exist alone physically, or two or more units may be integrated into one unit.

All or some of the embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid state disk, SSD)), or the like. For example, the foregoing usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A measurement method, comprising:
sending, by a management device, a measurement identifier to a measurement device, wherein the measurement identifier is used to be associated with a to-be-measured target service, and the target service is a service corresponding to a data flow that passes through an industry terminal; and
sending, by the management device, a measurement indication to the measurement device, wherein the measurement indication indicates to measure a performance indicator of the target service associated with the measurement identifier, and the performance indicator of the target service is associated with an abnormal event of the target service.

2. The method according to claim 1, wherein the method further comprises:
sending, by the management device, one or more of the following information to the measurement device:
a data packet type of the target service associated with the measurement identifier, an identifier of the target service, a customer-premises equipment identifier corresponding to the target service, or an identifier of the terminal device.

3. The method according to claim 1 or 2, wherein the sending, by a management device, a measurement identifier to a measurement device comprises:
after receiving a maintenance and testing request for performing maintenance and testing on the target service, sending, by the management device, the measurement identifier to the measurement device;
after receiving a monitoring request for monitoring the performance indicator of the target service, sending, by the management device, the measurement identifier to the measurement device; or
after detecting, through monitoring, that the terminal device goes online, sending, by the management device, the measurement identifier to the measurement device.

4. The method according to any one of claims 1 to 3, wherein the method further comprises:
receiving, by the management device, address information of the measurement device.

5. The method according to any one of claims 1 to 4, wherein the sending, by the management device, a measurement indication to the measurement device comprises:
after receiving the maintenance and testing request for performing maintenance and testing on the target service, sending, by the management device, the measurement indication to the measurement device; or
after receiving the monitoring request for monitoring the performance indicator of the target service, sending, by the management device, the measurement indication to the measurement device.

6. The method according to claim 5, wherein after receiving the monitoring request for monitoring the performance indicator of the target service, the management device sends the measurement indication to the measurement device; and
the method further comprises:
sending, by the management device, a measurement result cache indication of the target service and/or measurement result cache time of the target service to the measurement device.

7. The method according to claim 6, wherein the method further comprises:
sending, by the management device, a measurement result reporting indication to the measurement device, wherein the measurement result reporting indication indicates to report a measurement result of the target service in a target time period.

8. The method according to any one of claims 5 to 7, wherein the method further comprises:
sending, by the management device, one or more of the following information to the measurement device: the performance indicator of the target service, a maintenance and testing job identifier, the measurement identifier, measurement time of the target service, a measurement manner of the measurement device, or an address of the measurement device.

9. The method according to any one of claims 3 or 5 to 8, wherein the maintenance and testing request comprises one or more of the following information: the abnormal event of the target service, the identifier of the terminal device, or the identifier of the target service.

10. A measurement method, comprising:
receiving, by a measurement device, a measurement identifier from a management device, wherein the measurement identifier is used to be associated with a to-be-measured target service, and the target service is a service corresponding to a data flow that passes through an industry terminal;
associating, by the measurement device, the measurement identifier with the target service; and
measuring, by the measurement device, a performance indicator of the target service associated with the measurement identifier, wherein the performance indicator of the target service is associated with an abnormal event of the target service.

11. The method according to claim 10, wherein the method further comprises:
receiving, by the measurement device, one or more of the following information from the management device:
a data packet type of the target service associated with the measurement identifier, an identifier of the target service, a customer-premises equipment identifier corresponding to the target service, or an identifier of the terminal device.

12. The method according to claim 10 or 11, wherein the associating, by the measurement device, the measurement identifier with the target service comprises:
adding, by the measurement device, the measurement identifier to a data packet of the target service.

13. The method according to any one of claims 10 to 12, wherein the method further comprises:
sending, by the measurement device, address information of the measurement device.

14. The method according to any one of claims 10 to 13, wherein the method further comprises:
receiving, by the measurement device, a measurement indication from the management device, wherein the measurement indication indicates to measure the performance indicator of the target service associated with the measurement identifier; and
the measuring, by the measurement device, a performance indicator of the target service associated with the measurement identifier comprises:
in response to the measurement indication, measuring, by the measurement device, the performance indicator of the target service associated with the measurement identifier.

15. The method according to any one of claims 10 to 14, wherein the method further comprises:
receiving, by the measurement device, a measurement result cache indication of the target service and/or measurement result cache time of the target service from the management device; and
caching, by the measurement device, a measurement result of the target service based on the measurement result cache indication of the target service and/or the measurement result cache time of the target service.

16. The method according to claim 15, wherein the method further comprises:
if the measurement device receives a measurement result reporting indication from the management device in a preset time period, reporting, by the measurement device, a measurement result in a target time period to the management device, wherein the measurement result reporting indication indicates to report the measurement result of the target service in the target time period; or
if the measurement device does not receive the measurement result reporting indication from the management device in the preset time period, deleting, by the measurement device, a cached measurement result of the target service in the target time period.

17. The method according to any one of claims 14 to 16, wherein the method further comprises:
receiving, by the measurement device, one or more of the following information from the management device: the performance indicator of the target service, a maintenance and testing job identifier, the measurement identifier, measurement time of the target service, a measurement manner of the measurement device, or an address of the measurement device.

18. A measurement apparatus, comprising a unit configured to implement the method according to any one of claims 1 to 17.

19. A measurement apparatus, comprising:
a processor, configured to execute computer instructions stored in a memory, to enable the apparatus to perform the method according to any one of claims 1 to 17.

20. The apparatus according to claim 19, wherein the apparatus further comprises the memory and/or a communication interface, wherein the communication interface is coupled to the processor; and
the communication interface is configured to input and/or output information.

21. The apparatus according to claim 19 or 20, wherein the apparatus is a chip.

22. A computer-readable storage medium, wherein the computer-readable medium stores a computer program; and when the computer program is executed by one or more processors, an apparatus comprising the processor is enabled to perform the method according to any one of claims 1 to 17.

23. A computer program product, wherein the computer program product comprises computer program code, and when the computer program code is run on a computer, the method according to any one of claims 1 to 17 is implemented.

24. A communication system, comprising a management device and a measurement device, wherein
the management device is configured to perform the method according to any one of claims 1 to 9, and
the measurement device is configured to perform the method according to any one of claims 10 to 17.
